(19)

Europäisches
Patentamt
European
Patent Office
Office européen
des brevets

(11)  **EP 2 561 984 A1**

(12)  # EUROPEAN PATENT APPLICATION
published in accordance with Art. 153(4) EPC

(43) Date of publication:
**27.02.2013 Bulletin 2013/09**

(21) Application number: **11771869.2**

(22) Date of filing: **06.04.2011**

(51) Int Cl.:
***B32B 27/32*** (2006.01)     ***B32B 5/22*** (2006.01)
***H01M 2/16*** (2006.01)     ***H01M 10/0566*** (2010.01)

(86) International application number:
**PCT/JP2011/058720**

(87) International publication number:
**WO 2011/132533 (27.10.2011 Gazette 2011/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2010 JP 2010095655**

(71) Applicant: **Mitsubishi Plastics, Inc.
Tokyo 103-0021 (JP)**

(72) Inventors:
• **TAKAGI, Yoshihito
Nagahama-shi
Shiga 526-8660 (JP)**

• **IMANAKA, Satoru
Nagahama-shi
Shiga 526-8660 (JP)**
• **MONOE, Takayuki
Nagahama-shi
Shiga 526-8660 (JP)**
• **NEMOTO, Tomoyuki
Nagahama-shi
Shiga 526-8660 (JP)**

(74) Representative: **Hayes, Adrian Chetwynd
Boult Wade Tennant
Verulam Gardens
70 Gray's Inn Road
London WC1X 8BT (GB)**

(54)  **LAMINATED POROUS FILM, SEPARATOR FOR NON-AQUEOUS ELECTROLYTE SECONDARY BATTERY, AND NON-AQUEOUS ELECTROLYTE SECONDARY BATTERY**

(57)    Disclosed is a laminated porous film that simultaneously satisfies communication, heat resistance and workability and has excellent properties as a separator for non-aqueous electrolyte secondary batteries. The laminated porous film is characterized in that a heat-resistant layer comprising a filler (a), a resin binder(b), and an extending agent(c)is laminated on at least one side of a porous polyolefin resin film, and in that the air permeability is no more than 2,000s/100ml.

Fig. 1

EP 2 561 984 A1

**Description**

TECHNICAL FIELD

The present invention relates to a laminated porous film which can be utilized as packing, hygiene, livestock, agricultural, building, and medical materials, and as a separation film, a light diffusing plate, and a separator for a battery, and particularly as a separator for a non-aqueous electrolyte battery.

BACKGROUND ART

A porous polymer materials having a large number of micro connecting holes is utilized in various fields, for example, as separation films to be used to produce ultrapure water, purify chemicals and process for water treatment; a waterproof moisture-permeable film to be used for clothes and sanitary materials; and the separator for use in the battery.

A secondary battery is widely used as the power source of OA (Office Automation), FA (Factory Automation), consumer electronics, and mobile devices such as telecommunications equipment. A lithium-ion secondary battery has a favorable volumetric efficiency when it is mounted on apparatuses and allows the apparatuses to be compact and lightweight. Therefore there is an increase in the use of mobile devices in which the lithium-ion secondary battery is used. Owing to research and development of a large secondary battery which has been made in the field of load leveling, UPS, an electric vehicle, and in many fields relating to the problem of energy and environment, the lithium-ion secondary battery which is a kind of a non-aqueous electrolyte secondary battery has widely spread in its use because the lithium-ion secondary battery has a large capacity, a high output, a high voltage, and an excellent long-term storage stability.

The lithium-ion secondary battery is so designed that the upper limit of the working voltage thereof is usually 4.1V to 4.2V. Because electrolysis occurs in an aqueous solution at such a high voltage, the aqueous solution cannot be used as an electrolyte. Therefore as an electrolytic solution capable of withstanding a high voltage, a so-called non-aqueous electrolyte solution in which an organic solvent is used is adopted. As a solvent for the non-aqueous electrolyte solution, an organic solvent having a high permittivity which allows a large number of lithium ions to be present is widely used. An organic carbonate ester compound such as polypropylene carbonate or ethylene carbonate is mainly used as the organic solvent having a high permittivity. As a supporting electrolyte serving as the ion source of the lithium ion in the solvent, an electrolyte having a high reactivity such as lithium hexafluorophosphate is used in the solvent by dissolving it therein.

The separator is interposed between the positive electrode of the lithium-ion secondary battery and its negative electrode to prevent an internal short circuit from occurring. Needless to say, the separator is demanded to have insulating performance as its role. In addition the separator is required to have a porous structure so that air permeability of allowing lithium ions to pass therethrough and a function of diffusing and holding the electrolytic solution are imparted to the separator. To satisfy these demands, a porous film is used for the separator.

Because batteries having a high capacity are used recently, the degree of importance for the safety of the battery has increased. A shut-down property (hereinafter referred to as SD property) contributes to the safety of the separator for the battery. The SD property is the function of preventing the temperature inside the battery from rising owing to closing of micropores when the battery has a high temperature of 100°C to 150°C, which leads to shut-off of ion conduction inside the battery off. The lowest temperature of temperatures at which the micropores of a laminated porous film are closed is called a shut-down temperature (hereinafter referred to as SD temperature). To use the laminated porous film as the separator for the battery, it is necessary for the laminated porous film to have the SD property.

Recently as a non-aqueous electrolyte secondary battery including a lithium-ion secondary battery has become higher in its energy density and power, the conventional SD property does not sufficiently work. Thus when the temperature inside the battery rises over 150°C which is the melting point of polyethylene, a short circuit occurs between the positive and negative electrodes owing to breakage of the separator caused by thermal contraction to generate accidents in which ignition is caused. Thus to secure safety, the separator is demanded to have a higher degree of heat resistance than the degree of heat resistance to be obtained by the conventional SD property.

To comply with the above-described demand, as disclosed in Japanese Patent Application Laid-Open No. 2004-227972 (patent document 1), Japanese Patent Application Laid-Open No. 2007-280911 (patent document 2), and Japanese Patent Application Laid-Open No. 2008-186721 (patent document 3), there are proposed the multilayered porous films each having the porous layer, containing the filler and the resin binder, which is layered on at least one surface of the porous polyolefin resin film. It is described in these patent documents that the methods of producing the multilayered porous films are excellent in safety because in these multilayered porous films, by forming the coating layer containing the inorganic filler or the like at a high content rate on the porous film, it is possible to prevent the occurrence of a short circuit between the positive and negative electrodes, even though abnormal heat is generated and the temperature of a battery continues to rise over the SD temperature.

In the art disclosed in Japanese Patent Application Laid-Open No. 2009-227891 (patent document 4), by carrying out the coating layer-forming solution application step immediately after the lengthwise stretching step is performed midway in the step of forming the porous film and thereafter by carrying out the widthwise stretching, the porous film and the porous layer containing the filler and the resin binder are simultaneously formed.

PRIOR ART DOCUMENT

PATENT DOCUMENT

Patent document 1: Japanese Patent Application Laid-Open No. 2004-227972
Patent document 2: Japanese Patent Application Laid-Open No. 2007-280911
Patent document 3: Japanese Patent Application Laid-Open No. 2008-186721
Patent document 4: Japanese Patent Application Laid-Open No. 2009-227891

SUMMARY OF THE INVENTION

PROBLEMS TO BE SOLVED BY THE INVENTION

In any of the methods described in the patent documents 1 through 3, treatment such as the application of the coating layer-forming solution is performed after the porous film is formed. Thus it is hard to say that these methods are excellent in productivity. Even though the coating layer-forming solution is widely applied to the porous film as a method excellent in productivity, it is necessary to use a wide coating layer-forming solution application apparatus. Therefore these methods are costly disadvantageous.

The porous film to be obtained in the patent document 4 has a problem that the heat resistance thereof is low because the filling density of the filler is low.

The object of the present invention is to solve the above-described problems. That is, the object of the present invention is to provide a laminated porous film which satisfies interconnection property, heat resistance, and processability and has excellent properties as a separator for a non-aqueous electrolyte secondary battery.

MEANS FOR SOLVING THE PROBLEM

To solve the above-described problem, the present invention provides a laminated porous film in which a heat-resistant layer containing a filler (a), a resin binder (b), and a stretching auxiliary agent (c) is layered on at least one surface of a porous polyolefin resin film. An air permeability of the laminated porous film is not more than 2000 seconds/100 ml.

It is preferable that in the laminated porous film of the present invention, the stretching auxiliary agent (c) has a boiling point of not less than 120°C or does not have a boiling point.

It is preferable that in the laminated porous film of the present invention, the stretching auxiliary agent (c) consists of not less than one kind selected from among glycol, glycol polymer, a modified substance of the glycol polymer, and glycerin.

It is preferable that the laminated porous film of the present invention has a β crystal activity.

EFFECT OF THE INVENTION

The present invention provides the laminated porous film which has properties excellent in its heat resistance, stretch property, and interconnection property and excellent properties as the separator for the non-aqueous electrolyte secondary battery.

BRIEF DESCRIPTION OF THE DRWINGS

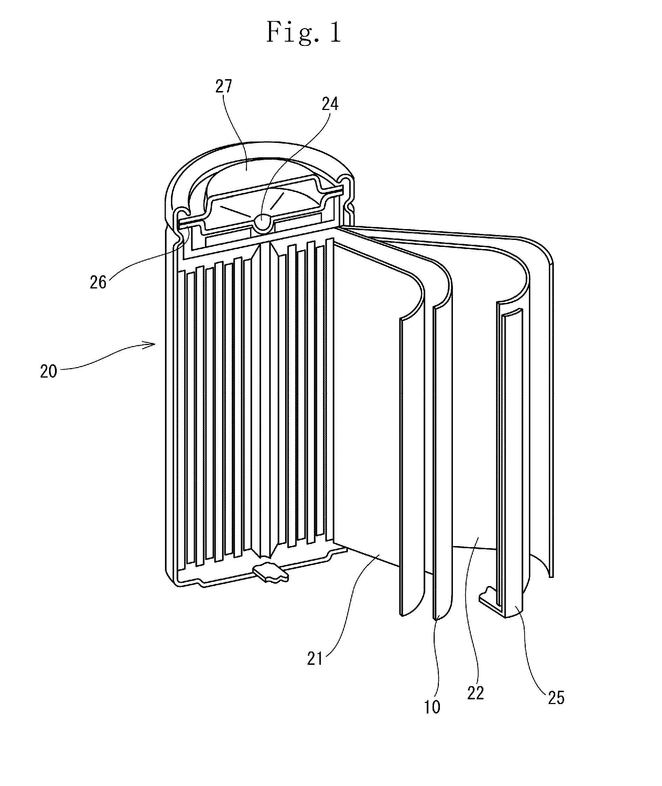

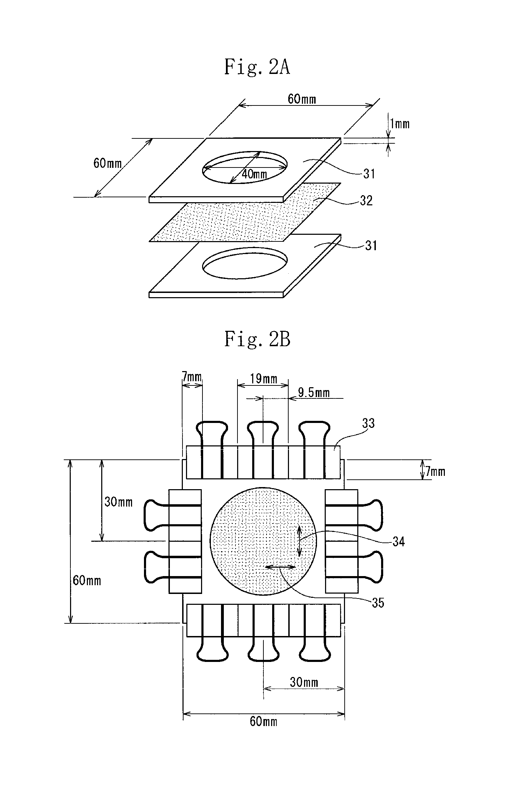

Fig. 1 is a schematic sectional view of a battery accommodating a laminated porous film of the present invention. Fig. 2 explains a method of fixing the laminated porous film in measurement of an SD property, heat resistance, and an X-ray diffraction.

MODE FOR CARRYING OUT THE INVENTION

The embodiments of the laminated porous film of the present invention are described in detail below.

In the present invention, unless specifically described, the expression of "main component" includes a case in which a resin composition contains components other than the main component in a range where the function of the main component is not inhibited. Although the content rate of the main component is not specified, the expression of "main component" also means that the main component is contained in the resin composition at not less than 50 mass%, favorably not less than 70 mass%, and especially favorably not less than 90 mass% (including 100 mass%).

Unless otherwise described, the description of "X to Y" (X, Y are any numerals) means "not less than X nor more than Y" and also includes meaning "preferably larger than X" and "preferably smaller than Y".

Each of components composing the laminated porous film of the present invention is described below.

(Porous Polyolefin Resin Film)

As examples of the polyolefin resin to be used for the porous polyolefin resin film, homopolymers or copolymers formed by polymerizing ethylene, propylene, 1-butene, 4-methyl-1-pentene, 1-hexane, and the like are listed. Of these polyolefin resins, the polypropylene resin and the polyethylene resin are preferable.

(Polypropylene Resin)

As the polypropylene resin, homopropylene (propylene homopolymer) and random copolymers or block copolymers consisting of propylene and $\alpha$-olefin such as ethylene, 1-butene, 1-pentene, 1-hexene, 1-heptene, 1-octene, 1-nonen or 1-decene are listed. Of the above-described polypropylene resins, the homo-polypropylene is used more favorably from the standpoint that it is capable of maintaining the mechanical strength and heat resistance of the laminated porous film.

It is favorable to use the polypropylene resin in which an isotactic pentad fraction (mmmm fraction) showing tacticity is 80 to 99%. It is more favorable to use the polypropylene resin in which the isotactic structure pentad fraction is 83 to 98% and most favorable to use the polypropylene resin in which the isotactic structure pentad fraction at 85 to 97%. When the isotactic pentad fraction is too low, there is a fear that the mechanical strength of the film is low. On the other hand, the upper limit of the isotactic pentad fraction is specified by the upper limit value industrially obtained at the present time. But in the case where a resin having a higher regularity at an industrial level is developed in the future, there is a possibility that the upper limit of the isotactic pentad fraction is altered.

The isotactic pentad fraction (mmmm fraction) means a three-dimensional structure in which all of five methyl groups which are side chains branched from a main chain consisting of a carbon-carbon bond composed of arbitrary continuous five propylene units are positioned in the same direction with respect to the main chain or the ratio of the side chains positioned in the same direction with respect to the main chain. The attribution of a signal in a methyl group region complies with A. Zambelli et al (Marcomolecules 8,687, (1975)).

It is favorable that Mw/Mn which is a parameter showing the molecular-weight distribution of the polypropylene resin is 2.0 to 10.0. It is more favorable to use the polypropylene resin having the Mw/Mn of 2.0 to 8.0 and most favorable to use the polypropylene resin having the Mw/Mn of 2.0 to 6.0. The smaller is the Mw/Mn, the narrower is the molecular-weight distribution. When the Mw/Mn is less than 2.0, there occurs a problem that extrusion moldability is low, and in addition it is difficult to industrially produce the polypropylene resin. On the other hand, when the Mw/Mn exceeds 10.0, the amount of a low molecular-weight component becomes large. Thereby the mechanical strength of the laminated porous film is liable to be low. The Mw/Mn is obtained by a GPC (Gel Permeation Chromatography) method.

Although the melt flow rate (MFR) of the polypropylene resin is not limited to a specific value, the MFR thereof is favorably 0.5 to 15g/10 minutes and more favorably 1.0 to 10g/10 minutes. By setting the MFR to not less than 0.5g/10 minutes, the melt viscosity of the resin is high at a molding processing time and thus a sufficient productivity can be securely obtained. On the other hand, by setting the MFR to not more than 15g/10 minutes, it is possible to sufficiently hold the mechanical strength of the laminated porous film to be obtained. Thus problems are not liable to occur in practical uses. The MFR is measured in accordance with JIS K7210 in a condition where temperature is 230°C and a load is 2.16kg.

The method of producing the polypropylene resin is not limited to a specific one, but it is possible to exemplify known polymerization methods in which a known polymerization catalyst is used. For example, a multi-site catalyst represented by a Ziegler-Natta catalyst and a single-site catalyst represented by a Metallocene catalyst are exemplified.

As the polypropylene resin, it is possible to use the following products commercially available: "NOVATEC PP" and "WINTEC" (produced by Japan Polypropylene Corporation), "VERSIFY", "NOTIO", and "TAFMER XR" (produced by Mitsui Chemicals, Inc.), "ZELAS" and "THERMORUN" (produced by Mitsubishi Chemical Corporation), "SUMITOMO NOBLEN" and "TAFCELEN" (produced by Sumitomo Chemical Co., Ltd.), "PRIME TPO" (produced by Prime Polymer Corporation), "AdfleX", "Adsyl", and "HMS-PP (PF814)" (produced by SunAllomer Ltd.), and "INSPIRE" (produced by Dow Chemical Company).

It is preferable that the laminated porous film of the present invention has a "β crystal activity".

The β crystal activity can be considered as an index indicating that the polypropylene resin of a membrane material has generated a β crystal before the membrane material is stretched. When the polypropylene resin of the membrane material generates the β crystal before the membrane material is stretched, micropores are formed by stretching the membrane material even in the case where an additive such as a filler is not used. Thereby it is possible to obtain the laminated porous film having an air-permeable property.

In the laminated porous film of the present invention, as to whether the laminated porous film has the "β crystal activity", when a crystal melting peak temperature derived from the β crystal is detected by a differential scanning calorimeter to be described later and/or when a diffraction peak derived from the β crystal is detected by measurement to be made by using an X-ray diffraction measuring apparatus to be described later, it is determined that the laminated porous film has the "β crystal activity".

More specifically, after the temperature of the laminated porous film is raised from 25°C to 240°C at a heating speed of 10°C/minute, the laminated porous film is allowed to stand for one minute. After the temperature of the laminated porous film is dropped from 240°C to 25°C at a cooling speed of 10°C/minute, the laminated porous film is allowed to stand for one minute. Thereafter the temperature of the laminated porous film is raised again from 25°C to 240°C at the heating speed of 10°C/minute. In the case where the crystal melting peak temperature (Tmβ) derived from the β crystal of the polypropylene resin is detected by the differential scanning calorimeter at this time, it is determined that the laminated porous film has the β crystal activity.

The β crystal activity degree of the laminated porous film is computed based on an equation shown below by using a detected crystal melting heat amount (ΔHmα) derived from an α crystal of the polypropylene resin and a detected crystal melting heat amount (ΔHmβ) derived from the β crystal thereof.

$$\beta \text{ crystal activity degree } (\%) = [\Delta Hm\beta/(\Delta Hm\beta + \Delta Hm\alpha)] \times 100$$

For example, in the case where the polypropylene resin is homopolypropylene, the β crystal activity degree can be computed from the crystal melting heat amount (ΔHmβ), derived from the β crystal, which is detected mainly in a range not less than 145°C and less than 160°C and from the crystal melting heat amount (ΔHmα), derived from the α crystal, which is detected mainly in a range not less than 160°C nor more than 170°C. In the case of random polypropylene in which 1 to 4 mol% of ethylene is copolymerized with each other, the β crystal activity degree can be computed from the crystal melting heat amount (ΔHmβ), derived from the β crystal, which is detected mainly in a range not less than 120°C and less than 140°C and from the crystal melting heat amount (ΔHmα), derived from the α crystal, which is detected mainly in a range not less than 140°C nor more than 165°C.

It is preferable that the higher the β crystal activity degree of the laminated porous film is, the more favorable. The β crystal activity degree is favorably not less than 20%, more favorably not less than 40%, and especially favorably not less than 60%. When the laminated porous film has the β crystal activity degree not less than 20%, the β crystal of the polypropylene resin can be generated in an unstretched membrane material and that many pores fine and homogeneous can be formed by stretching the unstretched membrane material. Consequently the laminated porous film can be used as a separator for a lithium-ion secondary battery having a high mechanical strength and an excellent air-permeable performance.

The upper limit value of the β crystal activity degree is not limited to a specific value. But the higher is the β crystal activity degree, the more effectively the above-described effect can be obtained. Therefore it is preferable that the upper limit of the β crystal activity degree is as close to 100% as possible.

Whether the laminated porous film has the β crystal activity can be also determined based on a diffraction profile to be obtained by conducting wide-angle X-ray diffraction measurement of the laminated porous film subjected to specific heat treatment.

In detail, after the laminated porous film is thermally treated at 170°C to 190°C higher than the melting point of the polypropylene resin, the laminated porous film in which the β crystal has been generated and grown is gradually cooled to carry out the wide-angle X-ray measurement. When a diffraction peak derived from a (300) plane of the β crystal of the polypropylene resin is detected in a range of 2θ = 16.0° to 16.5°, it is determined that the laminated porous film has the β crystal activity.

Regarding the detail of the β crystal structure of the polypropylene resin and the wide-angle X-ray diffraction, it is possible to refer to Macromol. Chem. 187,643-652 (1986), Prog. Polym. Sci. Vol. 16,361-404 (1991), Macromol. Symp. 89,499-511 (1995), Macromol. Chem. 75,134 (1964), and reference documents listed in these documents. The method of evaluating the β crystal activity by using the wide-angle X-ray diffraction is shown in detail in the examples of the present invention to be described later.

The β crystal activity can be measured in the case where the laminated porous film has a single-layer structure and in the case where a plurality of porous layers are layered one upon another.

It is preferable that in the case where a layer containing the polypropylene resin is laminated on the layer consisting of the polypropylene resin, both layers have the β crystal activity.

As methods of obtaining the β crystal activity, the method of adding polypropylene treated to generate the peroxide radical to the resin composition, as described in Japanese Patent No. 3739481 and the method of adding a β crystal nucleating agent to the resin composition are exemplified.

(β Crystal Nucleating Agent)

As the β crystal nucleating agent to be used in the present invention, those shown below are listed. It is possible to use any of the β crystal nucleating agents which increase the generation and growth of the β crystal of the polypropylene resin. The β crystal nucleating agents may be used by mixing not less than two kinds thereof with each other.

As the β crystal nucleating agent, it is possible to list amide compounds; tetraoxaspiro compounds; quinacridones; iron oxides having a nanoscale size; alkaline metal salts or alkaline earth metal salts of carboxylic acid represented by 1,2-potassium hydroxystearate, magnesium benzoate, magnesium succinate, and magnesium phthalate; aromatic sulfonic acid compounds represented by sodium benzensulfonate and sodium naphthalene sulfonate; diesters or triesters of dibasic or tribasic carboxylic acid; phthalocyanine-based pigments represented by phthalocyanine blue; two-component compounds composed of a component A which is an organic dibasic acid and a component B which is an oxide, a hydroxide or a salt of the IIA group metals of the Periodic Table; and compositions consisting of a cyclic phosphorous compound and a magnesium compound. Other kinds of the β crystal nucleating agent are described in Japanese Patent Application Laid-Open Nos. 2003-306585, 06-289566, and 09-194650.

As examples of the β crystal nucleating agent commercially available, "N Jester NU-100" produced by New Japan Chemical Co., Ltd. is exemplified. As examples of the polypropylene resin to which the β crystal nucleating agent has been added, it is possible to list Polypropylene "Bepol B-022SP" produced by Aristech Inc., Polypropylene "Beta (β)-PP BE60-7032" produced by Borealis Inc., and Polypropylene "BNX BETAPP-LN" produced by Mayzo Inc. are listed.

It is necessary to appropriately adjust the mixing ratio of the β crystal nucleating agent to be added to the polypropylene resin according to the kind of the β crystal nucleating agent and the composition of the polypropylene resin. It is favorable to add 0.0001 to 5.0 parts by mass of the β crystal nucleating agent, more favorable to add 0.001 to 3.0 parts by mass thereof, and most favorable to add 0.01 to 1.0 part by mass thereof to 100 parts by mass of the polypropylene resin. When the mixing ratio of the β crystal nucleating agent is not less than 0.0001 parts by mass, it is possible to generate and grow the β crystal activity sufficiently at a production time, secure the β crystal activity sufficiently in using the laminated porous film as the separator for the battery, and thus obtain desired air-permeable performance. When not more than 5.0 parts by mass of the β crystal nucleating agent is added to the polypropylene resin, economic advantage is obtained, and in addition, the β crystal nucleating agent does not bleed to the surface of the laminated porous film, which is preferable.

In the case where a layer containing the polypropylene resin is layered on the layer consisting of the polypropylene resin, the amounts of the β crystal nucleating agent to be contained in the layers may be equal to each other or different from each other. By altering the addition amount of the β crystal nucleating agent, the porous structure of each layer can be appropriately adjusted.

(Other Components)

In the present invention, in addition to the above-described components, additives to be normally contained in the resin composition may be appropriately added to the polypropylene resin in a range in which they do not outstandingly inhibit the properties of the effect of the present invention. The additives are added to the polypropylene resin to improve and adjust molding processability, productivity, and various properties of the laminated porous film. It is possible to list recycle resin which is generated from trimming waste such as a lug, inorganic particles such as silica, talc, kaolin, calcium carbonate, and the like, pigments such as titanium oxide, carbon black, and the like, a flame retardant, a weathering stabilizer, a heat stabilizer, an antistatic agent, a melt viscosity improving agent, a crosslinking agent, a lubricant, a nucleating agent, plasticizer, an age resistor, an antioxidant, a light stabilizer, an ultraviolet ray absorber, a neutralizing agent, an antifog agent, an anti-blocking agent, a slip agent, and a coloring agent. More specifically, the antioxidant described in the book "PLASTIC COMPOUNDING AGENT" on pages 154 through 158, the ultraviolet absorbing agent described on pages 178 through 182 thereof, the surface-active agent serving as the antistatic agent described on pages 271 through 275 thereof, and the lubricating agent described on pages 283 through 294 thereof are listed.

(Polyethylene Resin)

As the polyethylene resin, it is possible to list homopolymer polyethylene such as ultra-low-density polyethylene, low-density polyethylene, high-density polyethylene, linear low-density polyethylene, and ultrahigh-molecular-weight polyethylene characteristic in its molecular weight and in addition, an ethylene-propylene copolymer, and copolymer polyethylene of the polyethylene resin and other polyolefin resins. Of these polyethylene resins, the homopolymer polyethylene and the copolymer polyethylene containing not more than 2 mol% of an $\alpha$-olefin comonomer are favorable. The homopolymer polyethylene is more favorable. The kind of the $\alpha$-olefin comonomer is not limited to a specific one.

The above density of the polyethylene resin is set to favorably 0.910 to 0.970g/cm$^3$, more favorably 0.930 to 0.970g/cm$^3$, and most favorably 0.940 to 0.970g/cm$^3$. When the density thereof is not less than 0.910g/cm$^3$, the polyethylene resin is capable of having a proper SD property, which is preferable. When the density thereof is not more than 0.970g/cm$^3$, the polyethylene resin is capable of having the proper SD property, and in addition stretch property thereof is maintained, which is preferable. The density thereof can be measured in accordance with JIS K7112 by using a density gradient tube method.

Although the melt flow rate (MFR) of the polyethylene resin is not specifically limited, MFR thereof is favorably 0.03 to 30g/10 minutes and more favorably 0.3 to 10g/10 minutes. When the MFR is not less than 0.03g/10 minutes, the melt viscosity of the resin is sufficiently low at a molding processing time, and thus productivity is excellent, which is preferable. On the other hand, when the MFR is not more than 30g/10 minutes, the polyethylene resin is capable of obtaining a sufficient mechanical strength, which is preferable.
The MFR is measured in accordance with JIS K7210 in the condition where temperature is 190°C and a load is 2.16kg.

The catalyst for polymerizing the polyethylene resin is not limited to a specific kind, but it is possible to use any of a Ziegler-Natta catalyst, a Phillips catalyst, and a Kaminski catalyst. As methods of polymerizing the polyethylene resin, it is possible to use one-step polymerization, two-step polymerization, and multi-step polymerization. It is possible to use the polyethylene resin formed by any of the above-described methods.

(Porousness Acceleration Compound)

It is preferable to add a porousness acceleration compound X which accelerates porousness to the polyethylene resin. By adding the porousness acceleration compound X to the polyethylene resin, it is possible to effectively obtain a porous structure and easily control the configuration and diameter of micropores.
The kind of the porousness acceleration compound X is not limited to specific kinds. Modified polyolefin resin, alicyclic saturated hydrocarbon resin, modified substances thereof, ethylene copolymers, and wax are exemplified. It is favorable that the polyethylene resin contains at least one kind selected from among the above-described porousness acceleration compounds X. Of these porousness acceleration compounds X, the alicyclic saturated hydrocarbon resin, the modified substances thereof, the ethylene copolymers, and the wax having a high effect for achieving porousness are favorable. The wax is more favorable from the standpoint of moldability.

As the alicyclic saturated hydrocarbon resin and the modified substances thereof, petroleum resin, rosin resin, terpene resin, coumarone resin, indene resin, coumarone-indene resin, and modified substances thereof are listed.

In the present invention, the petroleum resin means aliphatic, aromatic, and copolymerization petroleum polymer resins to be obtained by homo-polymerization or copolymerization of one or not less than two kinds of aliphatic olefins and diolefins having C4 to C10 to be obtained from side products resulting from thermal decomposition of naphtha and of aromatic compounds which have not less than C8 and olefinic unsaturated bonds.

The petroleum resin includes aliphatic petroleum resin whose main raw material is C5 fraction, aromatic petroleum resin whose main raw material is C9 fraction, copolymerization petroleum resin of the aliphatic petroleum resin and the aromatic petroleum resin, and alicyclic petroleum resin. As the terpene resin, it is possible to exemplify terpene resin and terpene-phenol resin to be obtained from $\beta$-pinene. As the rosin resin, it is possible to exemplify rosin resin such as gum rosin, wood rosin, and the like and esterified rosin resin modified with glycerin or pentaerythritol. When alicyclic saturated hydrocarbon resin and modified substances thereof are mixed with the polyethylene resin, they show a comparatively favorable compatibility with the polyethylene resin. The petroleum resin is more favorable from the standpoint of color and thermal stability. To use the hydrogenated petroleum resin is more favorable.

The hydrogenated petroleum resin is obtained by hydrogenating the petroleum resin by conventional methods. For example, hydrogenated aliphatic petroleum resin, hydrogenated aromatic petroleum resin, hydrogenated copolymerization petroleum resin, hydrogenated alicyclic petroleum resin, and hydrogenated terpene resin are listed. Of the hydrogenated petroleum resin, the hydrogenated alicyclic petroleum resin obtained by copolymerizing a cyclopentadiene compound and an aromatic vinyl compound with each other is especially preferable. As the hydrogenated petroleum resin commercially available, "ARKON" (produced by Arakawa Chemical Industries, Ltd.) is exemplified.

In the present invention, the ethylene copolymers mean compounds obtained by copolymerizing ethylene with not less than one kind selected from among vinyl acetate, unsaturated carboxylic acid, unsaturated carboxylic acid anhydride, and carboxylic acid ester.

In the ethylene copolymer, the content rate of an ethylene monomer unit is favorably not less than 50 parts by mass, more favorably not less than 60 parts by mass, and most favorably not less than 65 parts by mass. The upper limit of the content rate of the ethylene monomer unit is favorably not more than 95 parts by mass, more favorably not more than 90 parts by mass, and most favorably not more than 85 parts by mass. When the content rate of the ethylene monomer unit is within the predetermined range, it is possible to form the porous structure more efficiently.

The ethylene copolymer having the MFR (JIS K7210, temperature: 190°C, load: 2.16kg) not less than 0.1g/10 minutes nor more than 10g/10 minutes is preferably used. When the MFR is not less than 0.1g/10 minutes, extrusion processability can be favorably maintained. On the other hand, when the MFR is not more than 10g/10 minutes, the strength of the film is unlikely to deteriorate, which is preferable.

The ethylene copolymers shown below can be commercially obtained. As an ethylene-vinyl acetate copolymer, "EVAFLEX" (produced by Du pont-Mitsui Polychemicals Co., Ltd.) and "Novatec EVA" (produced by Japan Polyethylene Corporation) are exemplified. As an ethylene-acrylic acid copolymer, "NUC copolymer" (produced by Nippon Unicar Co., Ltd.), "EVAFLEX-EAA" (produced by Du pont-Mitsui Polychemicals Co., Ltd.), "REXPEARL EAA" (produced by Japan Ethylene Corporation) are exemplified. As an ethylene-(metha)acrylate copolymer, "ELVALOY" (produced by Du pont-Mitsui Polychemicals Co., Ltd.) and "REXPEARLE MA" (produced by Japan Ethylene Corporation) are exemplified. As an ethylene-ethyl acrylate copolymer, "REXPEARL EEA" (produced by Japan Ethylene Corporation) is exemplified. As an ethylene-methyl(metha)acrylate copolymer, "ACRYFT" (produced by Sumitomo Chemical Co., Ltd.) is exemplified. As an ethylene-vinyl acetate-maleic anhydride terpolymer, "BONDINE" (produced by Sumitomo Chemical Co., Ltd.) is exemplified. As an ethylene-glycidyl methacrylate copolymer, an ethylene-vinyl acetate-glycidyl methacrylate terpolymer, and an ethyl-ethyl acrylate-glycidyl methacrylate terpolymer, "BONDFAST" (produced by Sumitomo Chemical Co., Ltd.) are exemplified.

In the present invention, the wax is an organic compound satisfying the properties of the following (a) and (b).

(a) Melting point is 40°C to 200°C.
(b) Melt viscosity at temperatures higher than the melting point by 10°C is not more than 50 Pa· s.

The wax includes polar wax or nonpolar wax, polypropylene wax, polyethylene wax, and wax modifier. More specifically, it is possible to list the polar wax, the nonpolar wax, Fischer-Tropsh wax, oxidized Fischer-Tropsh wax, hydroxysteroid wax, functionalized wax, the polypropylene wax, polyethylene wax, wax modifier, amorphous wax, carnauba wax, caster oil wax, microcrystalline wax, beeswax, castor wax, vegetable wax, candelilla wax, Japan wax, ouricury wax, Douglas-fir Bark wax, rice bran wax, jojoba wax, bayberry wax, montan wax, ozokerite wax, ceresin wax, petroleum wax, paraffin wax, chemically modified hydrocarbon wax, substituted amide wax, combinations of these waxes, and derivatives thereof. Of these waxes, the paraffin wax, the polyethylene wax, and the microcrystalline wax are favorable because these waxes allow the porous structure to be formed efficiently. From the standpoint of the SD property, the microcrystalline wax which allows pore diameters to be small is more favorable. As the polyethylene wax commercially available, "FT-115" (produced by Nippon Seiro Co., Ltd.) is exemplified. As the microcrystalline wax commercially available, "Hi-Mic" (produced by Nippon Seiro Co., Ltd.) is exemplified.

In forming micropores by peeling the interface of the polyethylene resin and the porousness acceleration compound X, the lower limit of the mixing amount of the porousness acceleration compound X for 100 parts by mass of the polyethylene resin contained in one layer is favorably not less than 1 part by mass, more favorably not less than 5 parts by mass, and most favorably not less than 10 parts by mass. On the other hand, as the upper limit of the mixing amount of the porousness acceleration compound X, the mixing amount thereof is favorably not more than 50 parts by mass, more favorably not more than 40 parts by mass, and most favorably not more than 30 parts by mass. By setting the mixing amount of the porousness acceleration compound X for 100 parts by mass of the polyethylene resin to not less than one part by mass, it is possible to obtain a sufficient effect of generating an intended favorable porous structure. By setting the mixing amount of the porousness acceleration compound X for 100 parts by mass of the polyethylene resin to not more than 50 parts by mass, it is possible to secure a more stable moldability.

In addition to the polyethylene resin and the porousness acceleration compound X, as necessary, thermoplastic resin may be used in a range where the thermal property of the porous film, specifically, porousness is not inhibited. As other thermoplastic resins which can be mixed with the polyethylene resin, styrene resin such as styrene, AS resin, and ABS resin; ester resin such as polyvinyl chloride, fluororesin, polyethylene terephthalate, polybutylene terephthalate, polycarbonate, and polyarylate; ether resin such as polyacetal, polyphenylene ether, polysulfone, polyether sulfone, polyether ether ketone, and polyphenylene sulfide; and polyamide resin such as nylon 6, nylon 6-6, and nylon 6-12 are listed.

A rubber component such as a thermoplastic elastomer may be added to the polyethylene resin as necessary. As the thermoplastic elastomer, styrene· butadiene elastomer, polyolefin elastomer, urethane elastomer, polyester elastomer, polyamide elastomer, 1,2-polybutadiene elastomer, polyvinyl chloride elastomer, and ionomer elastomer are listed.

In addition to the polyethylene resin and the porousness acceleration compound X, the resin composition may contain additives or other components to be normally contained therein. The additives are used to improve and adjust molding processability, productivity, and various properties of the laminated porous film. It is possible to list recycle resin generated from trimming waste such as a lug, inorganic particles such as silica, talc, kaolin, calcium carbonate, and the like, pigments such as titanium oxide, carbon black, and the like, a flame retardant, a weathering stabilizer, a heat stabilizer, an antistatic agent, a melt viscosity improving agent, a crosslinking agent, a lubricant, a nucleating agent, a plasticizer, an age resistor, an antioxidant, a light stabilizer, an ultraviolet ray absorber, a neutralizing agent, an antifog agent, an anti-blocking agent, a slip agent, and a coloring agent.

Of the above-described additives, the nucleating agent is preferable because it has the effect of controlling the crystal structure of the polyethylene resin and making the porous structure fine when the unporous membrane material is stretched to form micropores therein. As examples of the nucleating agent commercially available, "GEL ALL D" (produced by New Japan Science Ltd.), "ADEKASTAB" (produced by Asahi Denka Co., Ltd.), "Hyperform" (produced by Milliken & Company), and "IRGACLEAR D" (produced by Chiba Specialty Chemicals, Inc.) are listed. As an example of the polyethylene resin to which the nucleating agent has been added, "RIKEMASTER" (produced by Riken Vitamin Co., Ltd.) and the like are commercially available.

(Layer Structure of Porous polyolefin Resin Film)

In the present invention, the porous polyolefin resin film may be composed of a single layer or a plurality of layers laminated one upon another. But it is favorable to compose the porous polyolefin resin film of not less than two layers laminated one upon another. It is more favorable to compose the porous polyolefin resin film of the layer containing the polypropylene resin and the layer containing the polyethylene resin laminated thereon.

The layer structure of the porous polyolefin resin film is not limited to a specific one, provided that at least one layer (hereinafter referred to as "layer A") containing the polypropylene resin is present in the porous polyolefin resin film. Other layer (hereinafter referred to as "layer B") can be laminated on the layer containing the polypropylene resin within the range in which the layer B does not inhibit the function of the porous polyolefin resin film. A structure in which a strength-holding layer, a heat-resistant layer (high-melting temperature layer), and a shut-down layer (low-melting temperature layer) are laminated one upon another is exemplified. For example, in the case where the porous polyolefin resin film is used as the separator for the lithium ion battery, as described in Japanese Patent Application Laid-Open No. 04-181651, it is preferable to layer the low-melting temperature layer which closes pores in a high-temperature atmosphere and secures the safety of the battery on the layer containing the polypropylene resin.

It is possible to exemplify a two-layer structure composed of the layer A/the layer B laminated one upon another and a three-layer structure composed of the layer A/the layer B/the layer A or the layer B/the layer A/the layer B laminated one upon another. It is also possible to form a three-kind three-layer structure by combining a layer having a function different from that of the layer A and that of the layer B with the layer A and the layer B. In this case, the order of layering the layer A, the layer B, and the layer having the function different from that of the layer A and that of the layer B one upon another is not limited to a specific one. It is also possible to increase the number of layers to four layers, five layers, six layers, and seven layers as necessary.

The properties of the porous polyolefin resin film of the present invention can be freely adjusted according to a layer structure, a layering ratio, the composition of each layer, and a production method.

(Method of Producing porous polyolefin Resin Film)

The method of producing the laminated porous film of the present invention is described below. The present invention is not limited to the laminated porous film to be produced by the production method described below.

The method of producing the unporous membrane material is not limited to a specific method, but known methods may be used. It is possible to exemplify a method of fusing the thermoplastic resin composition by using an extruder, extruding it from a T-die, and cooling it with a casting roll to solidify it. It is also possible to use a method of cutting open a membrane material produced by using a tubular method to make it planar.

The method of stretching the unporous membrane material includes a roll stretching method, a rolling method, a tenter stretching method, and a simultaneous biaxial stretching method. A uniaxial stretching or a biaxial stretching is performed by using one of the above-described methods or in combination of not less than two of the above-described methods. From the standpoint of the control of the porous structure, a sequential biaxial stretching is preferable.

In the present invention, in the case where the porous polyolefin resin film is composed of a plurality of layers laminated one upon another, the method of producing the porous polyolefin resin film is classified into the following four methods according to the order of the step at which the unporous membrane material is made porous and the step at which layers are laminated one upon another.

(I) A method of making respective layers porous and thereafter layering the layers which have been made porous one upon another by stacking them upon another or by bonding them to one another with an adhesive agent or the like.

(II) A method of forming a laminated unporous membrane material by layering respective layers one upon another and thereafter making the unporous membrane material porous.

(III) A method of making one of layers, layering the layer which has been made porous and the other layer one upon another, and making the other layer porous.

(IV) A method of forming porous layers and thereafter layering the formed porous layers one upon another by applying inorganic or organic particles thereto or by evaporating metal particles thereto to form a laminated porous film.

In the present invention, it is preferable to use the method (II) from the standpoint of the simplicity of its process and productivity. To secure the adhesion between two layers, it is especially preferable to form the laminated unporous membrane material by co-extrusion and thereafter make it porous.

The production method is described in detail below.

Initially a mixed resin composition of the polypropylene resin, the thermoplastic resin, and additives is prepared. The thermoplastic resin and the additives are used as necessary. Materials such as the polypropylene resin, the β nucleating agent, and the additives to be used as desired are mixed with one another by using a Henschel-type mixer, a super mixer or a tumbler-type mixer. Alternatively all the components are put in a bag and mixed with one another by hand. After the components are fused and kneaded with a uniaxial extruder, a twin screw extruder or a kneader, a mixture is cut to obtain a pellet. It is preferable to use the twin screw extruder.

The pellet is supplied to the extruder and extruded from a co-extrusion mouthpiece of a T-die to form a membrane material.

The kind of the T-die is not limited to a specific one. When the two-kind three-layer structure is adopted for the laminated porous film of the present invention, it is possible to use both a multi-manifold type for the two-kind three-layer structure and a feed block type for the two-kind three-layer structure.

Although the gap of the T-die to be used is determined according to an ultimately necessary thickness of a film, a stretching condition, a draft ratio, and various conditions, the gap of the T-die is normally 0.1 to 3.0mm and favorably 0.5 to 1.0mm. It is unpreferable to set the gap of the T-die to less than 0.1mm from the standpoint of a production speed. When the gap of the T-die is more than 3.0mm, the draft ratio becomes large, which is not preferable from the standpoint of stability in the production of the film.

Although the extrusion processing temperature in the extrusion molding is appropriately adjusted according to the flow property of the resin composition and the moldability thereof, the extrusion processing temperature is set to favorably 180 to 350°C, more favorably 200 to 330°C, and most favorably 220 to 300°C. When the extrusion processing temperature is not less than 180°C, the fused resin has a sufficiently low viscosity and thus an excellent moldability and an improved productivity. On the other hand, by setting the extrusion processing temperature to not more than 350°C, it is possible to restrain the resin composition from deteriorating and thus the mechanical strength of the laminated porous film to be obtained from lowering.

The temperature at which the resin composition is cooled and solidified by using the casting roll is very important in the present invention. The ratio of the β crystal of the polypropylene resin contained in the membrane material can be adjusted. The temperature at which the resin composition is cooled and solidified by means of the casting roll is set to favorably 80 to 150°C, more favorably 90 to 140°C, and most favorably 100 to 130°C. By setting the temperature at which the resin composition is cooled and solidified to not less than 80°C, the ratio of the β crystal contained in the membrane material can be sufficiently increased, which is preferable. By setting the temperature at which the resin composition is cooled and solidified to not more than 150°C, it is possible to restrain the occurrence of a trouble that extruded fused resin adheres to the casting roll and sticks thereto. Thus it is possible to efficiently process the resin composition into the membrane material, which is preferable.

By setting the temperature of the casting roll to the above-described temperature range, the ratio of the β crystal of the polypropylene resin of the unstretched membrane material is set to 30 to 100%, favorably to 40 to 100%, more favorably to 50 to 100%, and especially favorably to 60 to 100%. By setting the ratio of the β crystal of the unstretched membrane material to not less than 30%, it is easy to make the unstretched membrane material porous by a stretching operation to be performed at a later step. Thereby it is possible to obtain the porous polyolefin resin film having an excellent air-permeable property.

By using the differential scanning calorimeter, the rate of the β crystal of the polypropylene resin of the unstretched membrane material is computed based on the following equation by using the detected crystal melting heat amount (ΔHmα) derived from the α crystal of the polypropylene resin (A) and the crystal melting heat amount (ΔHmβ) derived from the β crystal, when the temperature of the membrane material is raised from 25°C to 240°C at a heating speed of 10°C/minute.

$$\text{Rate (\%) of } \beta \text{ crystal} = [\Delta Hm\beta/(\Delta Hm\beta + \Delta Hm\alpha)] \times 100$$

At the stretching step, the unporous membrane material may be uniaxially or biaxially stretched in a length direction thereof or in a width direction thereof. In biaxially stretching the unporous membrane material, simultaneous biaxial stretching or sequential biaxial stretching may be performed. In forming the porous polyolefin resin film of the present invention, the sequential biaxial stretching is more favorable than the simultaneous biaxial stretching because a stretching condition can be selected at each stretching step and allows the porous structure to be easily controlled. It is more favorable to stretch the obtained unporous membrane material at least biaxially thereafter. In biaxially stretching the unporous membrane material, the simultaneous biaxial stretching or the sequential biaxial stretching may be performed. But the sequential biaxial stretching is more favorable than the simultaneous biaxial stretching because the sequential biaxial stretching allows stretching conditions (stretch ratio, temperature) to be easily selected at each stretching step and the porous structure to be easily controlled. The longitudinal direction of the membrane material and that of the film are called a "length direction", whereas a direction vertical to the longitudinal direction is called a "width direction". Stretching in the longitudinal direction is called "length-direction stretching", whereas stretching in the direction vertical to the longitudinal direction is called "width-direction stretching".

In the case where the sequential biaxial stretching is used, it is preferable to select a stretching temperature within the range of conditions shown below, although it is necessary to appropriately select the stretching temperature according to the composition of the resin composition to be used and a crystallized form.

In the case where the sequential biaxial stretching is used, it is necessary to vary the stretching temperature according to the composition, crystal melting peak temperature, and crystallization degree of the resin composition to be used. The stretching temperature in the length-direction stretching is controlled in the range of favorably 0 to 130°C, more favorably 10 to 120°C, and most favorably 20 to 110°C. The length-direction stretch ratio is set to favorably 2 to 10 times, more favorably 3 to 8 times, and most favorably 4 to 7 times longer than the original length of the unporous membrane material. By performing the length-direction stretching within the above-described range, it is possible to restrain breakage at a stretching time and generate a proper starting point of pores.
On the other hand, the stretching temperature in the width-direction stretching is set to 100 to 160°C, favorably 110 to 150°C, and most favorably 120 to 140°C. The width-direction stretch ratio is set to favorably 1.2 to 10 times, more favorably 1.5 to 8 times, and most favorably 2 to 7 times longer than the original length of the unporous membrane material. By performing the width-direction stretching in the above-described range, it is possible to moderately enlarge the starting point of the pores formed by the length-direction stretching and generate a fine porous structure.
The stretching speed at the above-described stretching steps is set to favorably 500 to 12000%/minute, more favorably 1500 to 10000%/minute, and most favorably 2500 to 8000%/minute.

To improve the dimensional stability of the porous film obtained in the above-described manner, it is preferable to heat-treat it. In the heat treatment, by setting the heat treatment temperature to favorably not less than 100°C, more favorably not less than 120°C, and most favorably not less than 140°C, the effect of the dimensional stability can be expected. On the other hand, the heat treatment temperature is set to favorably not more than 170°C, more favorably not more than 165°C, and most favorably not more than 160°C. When the heat treatment temperature is not more than 170°C, the polypropylene is unlikely to be melted by the heat treatment and thus the porous structure can be maintained, which is preferable. Relaxation treatment may be performed at 1 to 20% as necessary while the heat treatment step is being performed. By uniformly cooling the porous film and winding it after it is heat-treated, the laminated porous film of the present invention is obtained.

(Heat-Resistant Layer)

In the present invention, a heat-resistant layer containing a filler (a), a resin binder (b), and a stretching auxiliary agent (c) is layered on at least one surface of the porous polyolefin resin film.

(Filler (a))

The filler (a) which can be used in the present invention includes an inorganic filler and an organic filler and is not limited to specific ones.

As examples of the inorganic filler, carbonates such as calcium carbonate, magnesium carbonate, and barium carbonate; sulfates such as calcium sulfate, magnesium sulfate, barium sulfate; chlorides such as sodium chloride, calcium chloride, and magnesium chloride; oxides such as aluminum oxide, calcium oxide, magnesium oxide, zinc oxide, titanium oxide, and silica; and silicates such as talc, clay, and mica. Of these inorganic fillers, the barium sulfate and the aluminum oxide are preferable.

As examples of the organic filler, it is possible to list thermoplastic resins such as ultra-high-molecular-weight polyethylene, polystyrene, polymethyl methacrylate, polycarbonate, polyethylene terephthalate, polybutylene terephthalate, polyphenylene sulfide, polysulfone, polyethersulfone, polyether ether ketone, polytetrafluoroethylene, polyimide, polyetherimide, melamine, benzoguanamin; and thermosetting resins. Of these organic fillers, the crosslinked polystyrene is especially preferable.

The average particle diameter of the filler (a) is favorably not less than 0.1μm, more favorably not less than 0.2μm, and most favorably not less than 0.3μm. As the upper limit of the average particle diameter thereof, the average particle diameter thereof is favorably not more than 3.0μm and more favorably not more than 1.5μm. By setting the average particle diameter of the filler (a) to the above-described specified range, the laminated porous film is capable of displaying a sufficient degree of heat resistance. It is preferable to set the average particle diameter thereof to not more than 1.5μm from the standpoint of the dispersibility of the filler (a) in the porous layer.

In this embodiment, "the average particle diameter of the inorganic filler" is a value measured in conformity to the method of using SEM.

(Resin Binder (b))

The resin binder (b) which can be used in the present invention is not limited to specific kinds, provided that the resin binder (b) is capable of favorably bonding the filler (a) to the porous polyolefin resin film, electrochemically stable, and stable for a non-aqueous electrolyte solution when the laminated porous film is used for the separator for the non-aqueous electrolyte secondary battery.

Specifically an ethylene-vinyl acetate copolymer (EVA, structural unit derived from vinyl acetate is 20 to 35 mol%), an ethylene-acrylic acid copolymer such as an ethylene-ethyl acrylate copolymer, fluororesin [polyvinylidene fluoride (PVDF) and the like], fluororubber, styrene-butadiene rubber (SBR), nitrile butadiene rubber (NBR), polybutadiene rubber (BR), polyacrylonitrile (PAN), polyacrylic acid (PAA), carboxymethyl cellulose (CMC), hydroxyethyl cellulose (HEC), polyvinyl alcohol (PVA), polyvinyl butyral (PVB), polyvinyl pyrrolidone (PVP), poly(N-vinylacetamide), crosslinked acrylic resin, polyurethane, and epoxy resin are listed. These organic binders can be used singly or in combination of not less than two kinds thereof. Of these organic binders, the polyvinyl alcohol, the polyvinylidene fluoride, the styrene-butadiene rubber, the carboxymethyl cellulose, and the polyacrylic acid are favorable. The polyvinyl alcohol is more favorable than the above-described organic binders from the standpoint of the heat resistance and stretch property of the heat-resistant layer.

(Stretching Auxiliary Agent (c))

In the present invention, the stretching auxiliary agent (c) is used to improve the stretch property of the heat-resistant layer at a stretching time. As the stretching auxiliary agent (c), resins or solvents compatible with the resin binder (b) are mainly used. By adding the stretching auxiliary agent (c) to the filler (a) and the resin binder (b), it is possible to suppress defective stretching such as cracking and peeling of the heat-resistant layer which occurs at a stretching time and thus uniformly stretch the heat-resistant layer. Although the details are unclear, by adding the stretching auxiliary agent (c) to the filler (a) and the resin binder (b), the resin binder (b) is plasticized, which improves the stretch property of the heat-resistant layer.

The stretching auxiliary agent (c) has a boiling point of favorably not less than 120°C or does not have a boiling point, more favorably not less than 150°C, and most favorably not less than 180°C. In the case where the stretching auxiliary agent (c) has the boiling point not less than 120°C, it is possible to sufficiently restrain the stretching auxiliary agent (c) from volatizing at the stretching time and thus uniformly stretch the heat-resistant layer.

As the stretching auxiliary agent (c), xylene, styrene, chlorobenzene, ether alcohol, glycol, glycol polymer, modified substances of the glycol polymer, glycerin, and phthalate esters are listed. Of these stretching auxiliary agents (c), it is preferable that the stretching auxiliary agent (c) consists of at least one kind selected from among the glycol, the glycol polymer, the modified substances of the glycol polymer, and the glycerin from the standpoint of compatibility between the stretching auxiliary agent (c) and the resin binder (b) contained in a dispersion solution as well as a solvent in the method of producing the heat-resistant layer to be described later.

As examples of the glycol, ethylene glycol ($HOCH_2CH_2OH$), propylene glycol($HOCH_2CH(OH)CH_3$), diethylene glycol ($HOCH_2CH_2OCH_2CH_2OH$ 1,3-propanediol ($HOCH_2CH_2CH_2OH$) 1,2-butanediol ($HOCH_2CH(OH)CH_2CH_3$), 1,3-butanediol ($HOCH_2CH_2CH(OH)CH_3$), 1,4-butanediol ($HOCH_2(CH_2)_2CH_2OH$), 2,3-butanediol ($CH_3CH(OH)CH(OH)CH_3$), 1,2-pentadiol ($HOCH_2CH(OH)CH_2CH_2CH_3$), 1,5-pentadiol($HOCH_2(CH_2)_3CH_2OH$), 1,2-hexanediol ($HOCH_2CH(OH)CH_2CH_2CH_2CH_3$), 1,6-hexanediol ($HOCH_2(CH_2)_4CH_2OH$), 1,2-octanediol ($HOCH_2CH(OH)CH_2(CH_2)_4CH_3$), 1,8-octanediol($HOCH_2(CH_2)_6CH_2OH$), and 1,10-decanediol ($HOCH_2(CH_2)_8CH_2OH$) are listed.

As examples of the glycol polymer, polyethylene glycol($HO(CH_2CH_2O)_nH$), polypropylene glycol($HO(CH_2CH_2CH_2O)_nH$), and the like are exemplified. Of these glycol polymers, it is possible to preferably use the polyethylene glycol.

Because the polyethylene glycol has various degrees of polymerization, generally the average molecular weight thereof is set as an index. The range of the average molecular weight thereof is preferably 200 to 20000. When the average molecular weight thereof is not less than 200, the polyethylene glycol is compatible with polyvinyl alcohol. Thus the heat-resistant layer has an improved stretch property. When the average molecular weight thereof exceeds 20000, the polyethylene glycol is incompatible with the polyvinyl alcohol. Thus it is impossible to obtain the effect of improving the stretch property of the heat-resistant layer.

As examples of the modified substances of the glycol polymer, polyethylene glycol dimethyl ether ($CH_3(CH_2CH_2O)_nCH_3$), polyethylene glycol distearate, polyethylene glycol divinyl ether ($H_2C=CH(OCH_2CH_2)_nOCH=CH_2$), polyethylene glycol ethyl ether methacrylate ($H_2C=C(CH_3)CO_2(CH_2CH_2O)_nC_2H_5$), polyethylene glycol methylate, polyethylene glycol methacrylate, polyethylene glycol methyl ether ($CH_3(OCH_2CH_2)_nOH$), polyethylene glycol methyl ether acrylate ($H_2C=CHCO_2(CH_2CH_2O)_nCH_3$), polyethylene glycol methyl ether methacrylate, polyethylene glycol phenyl ether acrylate ($H_2C=CHCO_2(CH_2CH_2O)_nC_6H_5$) are listed.

In addition to the glycol, the glycol polymer, the modified substances of the glycol polymer, and the glycerin, it is preferable to use resins compatible with the resin binder (b) as the stretching auxiliary agent (c). As such resins, carboxymethylcellulose, acrylic acid ester, glue, casein, sodium alginate, chitosan, gelatin, polyacrylic acid, polyacrylamide, polyvinylpyrrolidone, and polyethylene oxide are listed.

In the heat-resistant layer, the content rate of the filler (a) is favorably not less than 100 mass% and more favorably not less than 200 mass% for 100 mass% of the resin binder (b). On the other hand, regarding the upper limit of the content rate of the filler (a), the content rate thereof is favorably not more than 1500 mass% and more favorably not more than 800 mass%. When the content rate of the filler (a) is not less than 100 mass% for 100 mass% of the resin binder (b), it is possible to produce the laminated porous film having an interconnection property. Thus the laminated porous film is capable of displaying an excellent air-permeable performance, which is preferable. On the other hand, when the content rate of the filler (a) is not more than 1500 mass% for 100 mass% of the resin binder (b), it is possible to suppress the occurrence of cracking and peeling of the heat-resistant layer and thus provide the heat-resistant layer with a sufficient degree of stretch property, which is preferable.

In the heat-resistant layer, the content rate of the stretching auxiliary agent (c) is favorably not less than 5 mass% and more favorably not less than 8 mass% for 100 mass% of the resin binder (b). Although the upper limit of the content rate of the stretching auxiliary agent (c) is not limited to a specific value, the content rate thereof is favorably not more than 200 mass% and more favorably not more than 100 mass% for 100 mass% of the resin binder (b). In the case where the content rate of the stretching auxiliary agent (c) is not less than 5 mass% for 100 mass% of the resin binder (b), the heat-resistant layer is capable of obtaining a sufficient degree of stretch property. On the other hand, in the case where the content rate thereof is not more than 200 mass% for 100 mass% of the resin binder (b), a sufficient degree of handleability is obtained, which is preferable.

(Method of Producing Heat-Resistant Layer)

A dispersion solution in which the filler (a) and the resin binder (b) are dissolved or dispersed in a solvent is applied to at least one surface of the porous polyolefin resin film to form the heat-resistant layer on the surface thereof. In this manner, it is possible to produce the laminated porous film of the present invention.

As the solvent, it is preferable to use solvents in which the filler (a) and the resin binder (b) can be uniformly and stably dissolved or dispersed. As such solvents, it is possible to list N-methyl pyrrolidone, N-dimethyl formaldehyde, N,N-dimethylacetamide, water, ethanol, toluene, hot xylene, and hexane. To stabilize the dispersion solution or improve the performance of applying the dispersion solution to the porous polyolefin resin film, various additives including a dispersing agent such as a surface-active agent, a thickener, a wetting agent, an antifoam agent, a pH preparation agent including acid or alkali may be added to the dispersion solution. It is preferable that these additives can be removed from the dispersion solution when the solvent is removed and a plasticizer is extracted. Additives which are electrochemically stable in the use range of the non-aqueous electrolyte secondary battery, do not inhibit a battery reaction, and are stable up to about 200°C may remain in the battery (in the laminated porous film).

As a method of dissolving or dispersing the filler (a) and the resin binder (b) in the solvent, it is possible to exemplify a mechanical stirring method to be carried out by using a ball mill, a bead mill, a planetary ball mill, a vibration ball mill, a sand mill, a colloid mill, an attritor, a roll mill, a high-speed impeller dispersion, a disperser, a homogenizer, a high-speed impact mill, ultrasonic dispersion, and a stirring blade.

As a method of applying the dispersion solution to the surface of the porous polyolefin resin film, the dispersion solution may be applied to the surface thereof after the extrusion molding finishes, after the length-direction stretching step finishes or after the width-direction stretching step finishes. It is preferable to apply the dispersion solution to the surface thereof after the extrusion molding finishes or after the length-direction stretching step finishes because by so doing, a drying step and a stretching step can be simultaneously performed.

The dispersion solution application method to be adopted in the above-described dispersion solution application step is not restricted to a specific method, provided that adopted methods are capable of achieving a necessary layer thickness and a necessary dispersion solution application area. As the dispersion solution application method, a gravure coating method, a small-diameter gravure coating method, a reverse roll coating method, a transfer roll coating method, a kiss coating method, a dip coating method, a knife coating method, an air doctor coating method, a blade coating method, a rod coating method, a squeeze coating method, a cast coating method, a die coating method, a screen printing method, and a spray applying method are listed. The dispersion solution may be applied to one surface of the porous polyolefin resin film or to both surfaces thereof according to uses.

It is preferable that the above-described solvent can be removed from the dispersion solution applied to the porous polyolefin resin film. As methods of removing the solvent from the dispersion solution, methods which do not adversely affect the porous polyolefin resin film can be adopted without restriction. The method of removing the solvent from the dispersion solution includes a method of drying the porous polyolefin resin film at temperatures not more than its melting point with the porous polyolefin resin film being fixed, a method of drying the porous polyolefin resin film at low temperatures and under a reduced pressure, and a method of coagulating the resin binder (b) and at the same time extracting the solvent by immersing the porous polyolefin resin film in a poor solvent for the resin binder (b).

It is possible to produce the laminated porous film of the present invention by using methods different from the above-described producing method. For example, it is possible to adopt a method of supplying a material of the porous polyolefin resin film to one extruder, supplying a material of the heat-resistant layer to other extruder, molding the materials into a laminated membrane material after integrating both materials with each other in one die, and thereafter performing the process of making the laminated unporous membrane material porous.

(Configuration and Property of Laminated Porous Film)

The thickness of the laminated porous film of the present invention is favorably 5 to 100$\mu$m. The thickness thereof is more favorably 8 to 50$\mu$m and most favorably 10 to 30$\mu$m. In the case where the laminated porous film is used as the separator for the non-aqueous electrolyte secondary battery, when the thickness thereof is not less than 5$\mu$m, it is possible to obtain substantially necessary electrical insulating properties. For example, even though a great force is applied to a projected portion of an electrode, the projected portion is unlikely to cut through the separator for the battery and thus a short circuit is unlikely to occur. Thus the laminated porous film having a thickness in the above-described range is excellent in safety. When the thickness of the laminated porous film is not more than 100$\mu$m, it is possible to decrease the electric resistance thereof and thus sufficiently secure the performance of the battery.

From the standpoint of the heat resistance of the heat-resistant layer, the thickness thereof is not less than 0.5$\mu$m, favorably not less than 2$\mu$m, more favorably not less than 3$\mu$m, and most favorably not less than 4$\mu$m. On the other hand, as the upper limit of the thickness of the heat-resistant layer, the thickness thereof is not more than 90$\mu$m, favorably not more than 50$\mu$m, more favorably not more than 30$\mu$m, and most favorably not more than 10$\mu$m from the standpoint of the interconnection property of the laminated porous film.

The porosity of the laminated porous film of the present invention is favorably not less than 30%, more favorably not less than 35%, and most favorably not less than 40%. When the porosity thereof is not less than 30%, the laminated porous film to be obtained secures the interconnection property and is excellent in its air-permeable property. On the other hand, regarding the upper limit of the porosity thereof, the porosity thereof is favorably not more than 70%, more favorably not more than 65%, and most favorably not more than 60%. When the porosity thereof is not more than 70%, the strength thereof is unlikely to deteriorate, which is preferable from the standpoint of the handleability thereof. The porosity is measured by using the method described in the examples.

The air permeability of the laminated porous film of the present invention is favorably not more than 2000 seconds/100 ml, more favorably 10 to 10000 seconds/100 ml, and most favorably 50 to 800 seconds/100 ml. When the air permeability of the laminated porous film is not more than 2000 seconds/100 ml, the laminated porous film has the interconnection property and hence an excellent air-permeable performance, which is preferable.
The air permeability means the degree of difficulty in pass-through of air in the thickness direction of the film and is expressed by seconds it takes for air having a volume of 100 ml to pass through the film. Therefore the smaller a numerical value is, the more easily the air passes through the film. On the other hand, the larger the numerical value is, the more difficultly the air passes therethrough. That is, the smaller the numerical value is, the higher is interconnection property in the thickness direction of the film. The larger is the numerical value, the lower is the interconnection property in the thickness direction thereof. The interconnection property means the degree of connection among pores in the thickness direction of the film. When the laminated porous film has a low air permeability, it is applicable to various uses. For example, when the laminated porous film having a low air permeability is used as the separator of the battery, lithium ions are capable of moving easily, and thus the battery has an excellent performance, which is preferable.

When the laminated porous film of the present invention is used as the separator for the battery, it is preferable that the laminated porous film has the SD property. Specifically, after the laminated porous film is heated at 135°C for 5 seconds, the air permeability thereof is favorably not less than 10000 seconds/100 ml, more favorably not less than 25000 seconds/100 ml, and most favorably not less than 50000 seconds/100 ml. By setting the air permeability of the laminated porous film after it is heated at 135°C for 5 seconds to not less than 10000 seconds/100 ml, pores are closed rapidly when heat is abnormally generated, and electric current is shut off. Thereby it is possible to prevent the occurrence of troubles of the battery such as rupture.

(Battery)

The non-aqueous electrolyte secondary battery accommodating the laminated porous film of the present invention as the separator thereof is described below with reference to Fig. 1.
Both a positive electrode plate 21 and a negative electrode plate 22 are spirally wound in such a way that the positive electrode plate 21 and the negative electrode plate 22 are overlapped each other via a separator 10. The outer side of the positive electrode plate 21 and that of the negative electrode plate 22 are fixed with a tape to hold the positive electrode plate 21 and the negative electrode plate 22 wound together via the separator 10 as a unit.
The above-described winding step is described in detail below. One end of the separator for the battery is passed through a slit portion of a pin. Thereafter the pin is rotated a little to wind the other end of the separator for the battery round the pin. At this time, the surface of the pin and the heat-resistant layer of the separator for the battery are in contact with each other. Thereafter the positive and negative electrodes are so arranged as to sandwich the separator for the battery therebetween. The pin is rotated to wind the positive and negative electrodes and the separator for the battery by means of a winding machine. After the winding operation finishes, the pin is pulled out of the unit composed of the positive electrode plate, the negative electrode plate, and the separator wound together.
The unit composed of the positive electrode plate 21, the separator 10, and the negative electrode plate 22 wound together is accommodated inside a bottomed cylindrical battery case and welded to a positive lead 24 and a negative lead 25. Thereafter the electrolyte is injected into a battery can. After the electrolyte penetrates into the separator 10 sufficiently, the periphery of the opening of the battery can is sealed with a positive lid 27 via a gasket 26. Thereafter preparatory charge and aging are carried out to produce a cylindrical non-aqueous electrolyte secondary battery 20.
The electrolytic solution composed of an organic solvent in which a lithium salt is dissolved is used. Although the organic solvent is not limited to a specific kind, esters such as propylene carbonate, ethylene carbonate, butylene carbonate, γ-butyrolactone, γ-valerolactone, dimethyl carbonate, methyl propionate, and butyl acetate; nitriles such as acetonitrile; ethers such as 1,2-dimethoxyethane, 1,2-dimethoxymethane, dimethoxypropane, 1,3-dioxolane, tetrahydrofuran, 2-methyltetrahydrofuran, and 4-methyl-1,3-dioxofuran; and sulfolane are listed. These organic solvents can be used singly or in combination of not less than two kinds thereof.
Above all, an electrolyte in which 1.0 mol/L of lithium phosphate hexafluoride ($LiPF_6$) is dissolved in a solvent in which two parts by mass of the methyl ethyl carbonate is mixed with one part by mass of the ethylene carbonate is preferable.
As the negative electrode, an alkali metal or a compound, containing the alkali metal, which is integrated with a current collector such as a net made of stainless steel is used. As the alkali metal, lithium, sodium, and potassium are listed. As the compound containing the alkali metal, alloys of the alkali metal and aluminum, lead, indium, potassium, cadmium, tin or magnesium; compounds of the alkali metals and a carbon material; and compounds of the alkali metal having a low electric potential and metal oxides or sulfides are listed.
In using the carbon material for the negative electrode, it is possible to use those capable of doping or de-doping lithium ions. For example, it is possible to use graphite, pyrolytically decomposed carbons, cokes, glassy carbons, calcined organic polymeric compounds, mesocarbon microbeads, carbon fibers, and activated carbon.
A negative electrode plate produced as follows is used as the negative electrode in this embodiment. A carbon material having an average particle diameter of 10μm is mixed with a solution in which vinylidene fluoride is dissolved in N-methylpyrrolidone to obtain a slurry. After the slurry, consisting of the mixture of the above-described substances, which forms the negative electrode is passed through a 70-mesh net to remove large particles, the slurry is uniformly applied to both surfaces of a negative electrode current collector consisting of a belt-shaped copper foil having a thickness of 18μm and is dried. After the slurry is compression-molded by a roll press machine, the molding is cut to obtain the belt-shaped negative electrode plate.
A molding produced as follows is used as the negative electrode. A metal oxide such as lithium cobalt oxide, lithium nickel oxide, lithium manganese oxide, manganese dioxide, vanadium pentoxide or chromium oxide and a metal sulfide such as molybdenum disulfide is used as the active substance of the positive electrode. A conductive assistant and a binding agent such as polytetrafluoroethylene are appropriately added to the positive active substance to obtain a combination of these substances. Thereafter the combination of these substances is processed into a molding by using a current collector such as stainless steel net as the core of the positive electrode.
In this embodiment, as the positive electrode, a belt-shaped positive electrode plate produced as described below is used. That is, as a conductive assistant, scaly graphite is added to the lithium cobalt oxide ($LiCoO_2$) at a mass ratio of the lithium cobalt oxide: the scaly graphite = 90 : 5. Both substances are mixed with each other to form a mixture.

The mixture and a solution in which the polyvinylidene fluoride is dissolved in the N-methylpyrrolidone are mixed with each other to obtain a slurry. After the slurry, consisting of the mixture of these substances, which forms the positive electrode is passed through the 70-mesh net to remove large particles, the slurry is uniformly applied to both surfaces of a positive current collector consisting of an aluminum foil having a thickness of 20μm and dried. After the slurry is compression-molded with by roll press machine, the molding is cut to obtain the belt-shaped positive electrode plate.

EXAMPLES

Examples and comparison examples are shown below. Although the laminated porous film of the present invention is described in detail below, the present invention is not limited thereto. The longitudinal direction of the laminated porous film is called the "length direction", and the direction vertical to the longitudinal direction is called the "width direction".

(1) Film Thickness

The in-plane thickness of each laminated porous film was measured at unspecified 30 points with a dial gauge of 1/1000mm. The average of the measured values was set as the film thickness.

(2) Content Rate of Filler (a)

The content rate of the filler (a) is the rate for 100 mass% of the resin binder (b) in the dispersion solution.

(3) Content Rate of Stretching Auxiliary Agent (c)

The content rate of the stretching auxiliary agent (c) is the rate for 100 mass% of the resin binder (b) in the dispersion solution.

(4) Air Permeability (Gurley Value)

The air permeability (second/100 ml) of each specimen was measured in accordance with JIS P8117.

(5) SD Property (air permeability after specimen is heated at 135°C for 5 seconds)

Each laminated porous film was cut square in the dimension of 60mm long and 60mm wide. As shown in Fig. 2(A), each laminated porous film was sandwiched between two aluminum plates (material: JIS A5052, size: 60mm in the length direction 34 of the film, 60mm in the width direction 35 thereof, and 1mm in the thickness thereof) where a circular hole having a diameter of Φ40mm was formed at the central portion. As shown in Fig. 2(B), the peripheries of the two aluminum plates were fixed with clips.
Thereafter each sample fixed with the two aluminum plates was immersed at a central portion of an oil bath (OB-200A produced by As One Co., Ltd.), having a temperature of 135°C, in which glycerin (first class produced by Nacalai Tesque Inc.) was filled up to 100mm from its bottom surface. The sample was heated for 5 seconds. Immediately after the heating finished, the sample was immersed in a separately prepared cooling bath in which glycerin having a temperature of 25°C was filled to cool the sample for 5 minutes. After the sample was cleaned with 2-propanol (high grade produced by Nacalai Tesque Inc.) and acetone (high grade produced by Nacalai Tesque Inc.), the sample was dried for 15 minutes in an air atmosphere having a temperature of 25°C. The air permeability of each of the dried samples was measured in accordance with the method used in the above-described method (2).

(6) Stretch Property

Obtained laminated porous films were visually observed to evaluate the stretch properties thereof in accordance with the following evaluation criterion.

o: A favorable state in which the heat-resistant layer was not broken, nor cracked, nor peeled.
x: A state in which heat-resistant layer was broken, cracked, and peeled.

(7) Heat Resistance

Each of the obtained laminated porous film was cut square in the dimension of 60mm long and 60mm wide.

As shown in Fig. 2(A), the laminated porous film was sandwiched between the two aluminum plates (material: JIS A5052, size: 60mm in the length direction 34 of the film, 60mm in the width direction 35 thereof, and 1mm in the thickness thereof) where the circular hole having the diameter of Φ40mm was formed at the central portion. As shown in 2(B), the periphery of the aluminum plates were fixed with clips.

Each sample in which the laminated porous film fixed to the two aluminum plates was put in a blow isothermal instrument (Tabai geer oven "GPH200" produced by Tabai Espec Corporation) having a set temperature of 180°C and a display temperature of 180°C. After the sample was held therein for 3 minutes, the sample was taken out of the blow isothermal instrument. Thereafter the state of each laminated porous film was checked to determine the configuration-maintaining performance thereof.

  o: Configuration was maintained without film breakage.
  ×: Configuration could not be maintained because the film was broken.

The β crystal activity of each of the obtained laminated porous films was evaluated as follows:

(8) Measurement of Differential Scanning Calorimetry (DSC)

By using a differential scanning calorimeter (DSC-7) produced by PerkinElmer Inc., each of the obtained laminated porous films was heated from 25°C up to 240°C at a scanning speed of 10°C/minute and allowed to stand for one minute. Thereafter the laminated porous films were cooled from 240°C down to 25°C at the scanning speed of 10°C/minute and allowed to stand for one minute. Thereafter the laminated porous films were heated again from 25°C up to 240°C at the scanning speed of 10°C/minute. When the laminated porous films were heated again, whether the β crystal activity was present or not was evaluated based on the following criterion according to whether a peak was detected in the range of 145°C to 160°C which is the crystal melting peak temperature ($Tm\beta$) derived from the β crystal of the polypropylene resin.

  o: Samples in which $Tm\beta$ was detected in the range of 145°C to 160°C (sample had β crystal activity).
  ×: Samples in which $Tm\beta$ was not detected in the range of 145°C to 160°C (sample did not have β crystal activity).
  The β crystal activity of each sample having a weight of 10mg was measured in a nitrogen atmosphere.

(9) Wide-Angle X-Ray Diffraction Measurement (XRD)

Each of the obtained laminated porous film was cut square in the dimension of 60mm long and 60mm wide. As shown in Fig. 2(A), each laminated porous film was sandwiched between the two aluminum plates (material: JIS A5052, size: 60mm in the length direction 34 of the film, 60mm in the width direction 35 thereof, and 1mm in the thickness thereof) where the circular hole having the diameter of Φ40mm was formed at the central portion. As shown in 2(B), the periphery of the aluminum plates were fixed with clips.

Each sample in which the laminated porous film fixed to the two aluminum plates was put in a blow isothermal instrument (Model: DKN602 produced by Yamato Science Corporation) having a set temperature of 180°C and a display temperature of 180°C. After each sample was allowed to stand therein for three minutes, the set temperature was altered to 100°C. Thereafter the sample was gradually cooled for not less than 10 minutes to cool it to 100°C. When the display temperature became 100°C, the sample was taken out of the blow isothermal instrument. The sample was cooled for 5 minutes in an atmosphere having a temperature of 25°C with the sample being fixed to the two aluminum plates. Thereafter wide-angle X-ray diffraction measurement was carried out on the circular central portion, of the sample, having the diameter of Φ40mm in the following measuring conditions.

  ■ Wide-angle X-ray diffraction measuring apparatus: Model Number: XMP18A produced by Mac science Co., Ltd.
  ■ X-ray source: CuK-α ray, output: 40kV, 200mA
  ■ Scanning method: 2θ/θ scan, 2θ range: 5° to 25°, scanning interval: 0.05°, scanning speed: 5°/minute

Obtained diffraction profiles were checked to evaluate whether the β crystal activity was present according to whether a peak derived from a (300) surface of the β crystal of the polypropylene resin was detected in the range of 2θ = 16.0° to 16.5°.

  o: Samples in which the peak was detected in the range of 2θ = 16.0° to 16.5° (sample had β crystal activity)
  ×: Samples in which the peak was not detected in the range of 2θ = 16.0° to 16.5° (sample did not have β crystal activity)

In the case where the laminated porous film cannot be cut in the dimension of 60mm long and 60mm wide, samples may be prepared by placing the laminated porous film at the circular hole, having the diameter of Φ40mm, which is disposed at the central portion of the aluminum plate.

[Production Example 1]

As a polypropylene resin composition composing a layer A, 0.2 parts by mass of 3,9-bis[4-(N-cyclohexylcarbamoyl)phenyl]-2,4,8,10-tetraoxaspiro[5.5] undecane was added as a β crystal nucleating agent to 100 parts by mass of polypropylene resin (Prime Polypro "F300SV" produced by Prime Polymer Co., Ltd., density: 0.90g/cm$^3$, MFR: 3.0g/ 10 minutes). After the mixture of the above-described components was supplied to a same direction twin screw extruder (produced by Toshiba Machine Co., Ltd., diameter: 40mmΦ, L/D: 32), the mixture was fused and kneaded at a set temperature of 300°C and extruded from a strand die. Thereafter a strand was cooled in water to solidify it and cut with a cutter to produce a pellet of the polypropylene resin composition. The β crystal activity of the polypropylene resin composition was 80%.

Thereafter as a polyethylene resin composition composing a layer B, 0.04 parts by mass of glycerol monoester and 10 parts by mass of microcrystalline wax ("Hi-Mic 1080" produced by Nippon Seiro Co., Ltd.) were added to 100 parts by mass of high-density polyethylene (NOVATEC HD HF560 produced by Japan Polyethylene Corporation, density: 0.963g/cm$^3$, MFR: 7.0g/10 minutes). The mixture of the above-described components was fused and kneaded at 220°C by using the same direction twin screw extruder to produce a pellet of the polyethylene resin composition.

The above-described two kinds of the materials were extruded from mouthpieces for lamination molding through a feed block for forming a two-kind three-layer structure by using different extruders in such a way that the outer layers of a laminated membrane material to be obtained consisted of the layer A and the intermediate layer thereof consisted of the layer B. Thereafter the materials were cooled to solidify them by using a casting roll having a temperature of 124°C. In this manner, the laminated membrane material having a two-kind three-layer structure of the layer A/the layer B/the layer A was produced.

After the laminated membrane material was stretched 4.6 times longer than its original length in its length direction by using a lengthwise stretching machine, corona treatment was carried out. Thereafter dispersion solutions shown in the examples and the comparison examples were applied thereto by using a meyer bar (No. 10). Thereafter the laminated membrane material was stretched two times longer than its original length in its width direction by using a widthwise stretching machine at 100°C. Thereafter the laminated membrane material was subjected to heat fixation/relaxation treatment. In this manner, a laminated porous film was obtained.

[Production Example 2]

0.2 parts by mass of the 3,9-bis[4-(N-cyclohexylcarbamoyl)phenyl]-2,4,8,10-tetraoxaspiro [5.5]undecane was added as the β crystal nucleating agent to 100 parts by mass of the polypropylene resin (Prime Polypro "F300SV" produced by Prime Polymer Co., Ltd., density: 0.90g/cm$^3$, MFR: 3.0g/10 minutes). After the mixture of the above-described materials was supplied to the same direction twin screw extruder (produced by Toshiba Machine Co., Ltd., diameter: 40mmΦ, L/D: 32), the mixture was fused and kneaded at a set temperature of 300°C. After the mixture was extruded from the strand die, a strand was cooled in water to solidify it and cut with the cutter to prepare a pellet of a polypropylene resin composition. The β crystal activity of the polypropylene resin composition was 80%.

After the above-described polypropylene resin composition was extruded from a T-die, it was cooled to solidify it by using the casting roll having a temperature of 124°C to prepare an unporous membrane material.

After the unporous membrane material was stretched 4.6 times longer than its original length in its length direction by using the lengthwise stretching machine, corona treatment was carried out. Thereafter dispersion solutions shown in the examples and the comparison examples were applied thereto by using the meyer bar (No. 10). After the unporous membrane material was stretched 2.3 times longer than its original length in its width direction at 150°C by using the widthwise stretching machine, the unporous membrane material was subjected to heat fixation/relaxation treatment to obtain a laminated porous film.

[Example 1]

25.1 parts by mass of alumina (Sumicorundum AA-06 produced by Sumitomo Chemical Co., Ltd., average particle diameter: 0.6μm), 1.9 parts by mass of polyvinyl alcohol (PVA124 produced by Kuraray Co., Ltd., saponification degree: 98.0 to 99.0, average degree of polymerization: 2400), and 0.5 parts by mass of polyethylene glycol (polyethylene glycol#200 produced by Nacalai Tesque Inc., average molecular weight: 190 to 210) were dispersed in 72.5 parts by mass of water to obtain a dispersion solution. At that time, the content rate of the filler (a) and that of the stretching auxiliary agent (c) contained in the dispersion solution were 1321 mass% and 26 mass% respectively for 100 mass% of the resin binder (b).

The properties of the laminated porous films obtained in the production example 1 were evaluated by using the obtained dispersion solution. The results are shown in table 1.

[Example 2]

25.1 parts by mass of the alumina (Sumicorundum AA-06 produced by Sumitomo Chemical Co., Ltd., average particle diameter: 0.6μm), 1.9 parts by mass of the polyvinyl alcohol (PVA124 produced by Kuraray Co., Ltd., saponification degree: 98.0 to 99.0, average degree of polymerization: 2400), and 1.9 parts by mass of the polyethylene glycol (polyethylene glycol#200 produced by Nacalai Tesque Inc., average molecular weight: 190 to 210) were dispersed in 71.1 parts by mass of water to obtain a dispersion solution. At that time, the content rate of the filler (a) and that of the stretching auxiliary agent (c) contained in the dispersion solution were 1321 mass% and 100 mass% respectively for 100 mass% of the resin binder (b).

The properties of the laminated porous films obtained in the production example 1 were evaluated by using the obtained dispersion solution. The results are shown in table 1.

[Example 3]

23.8 parts by mass of the alumina (Sumicorundum AA-06 produced by Sumitomo Chemical Co., Ltd., average particle diameter: 0.6μm), 3.2 parts by mass of the polyvinyl alcohol (PVA124 produced by Kuraray Co., Ltd., saponification degree: 98.0 to 99.0, average degree of polymerization: 2400), and 0.3 parts by mass of the polyethylene glycol (polyethylene glycol#200 produced by Nacalai Tesque Inc., average molecular weight: 190 to 210) were dispersed in 72.7 parts by mass of water to obtain a dispersion solution. At that time, the content rate of the filler (a) and that of the stretching auxiliary agent (c) contained in the dispersion solution were 744 mass% and 9 mass% respectively for 100 mass% of the resin binder (b).

The properties of the laminated porous films obtained in the production example 1 were evaluated by using the obtained dispersion solution. The results are shown in table 1.

[Example 4]

23.8 parts by mass of the alumina (Sumicorundum AA-06 produced by Sumitomo Chemical Co., Ltd., average particle diameter: 0.6μm), 3.2 parts by mass of the polyvinyl alcohol (PVA124 produced by Kuraray Co., Ltd., saponification degree: 98.0 to 99.0, average degree of polymerization: 2400), and 0.8 parts by mass of the polyethylene glycol (polyethylene glycol#200 produced by Nacalai Tesque Inc., average molecular weight: 190 to 210) were dispersed in 72.2 parts by mass of water to obtain a dispersion solution. At that time, the content rate of the filler (a) and that of the stretching auxiliary agent (c) contained in the dispersion solution were 744 mass% and 25 mass% respectively for 100 mass% of the resin binder (b).

The properties of the laminated porous films obtained in the production example 1 were evaluated by using the obtained dispersion solution. The results are shown in table 1.

[Example 5]

23.8 parts by mass of the alumina (Sumicorundum AA-06 produced by Sumitomo Chemical Co., Ltd., average particle diameter: 0.6μm), 3.2 parts by mass of the polyvinyl alcohol (PVA124 produced by Kuraray Co., Ltd., saponification degree: 98.0 to 99.0, average degree of polymerization: 2400), and 0.8 parts by mass of the polyethylene glycol (polyethylene glycol#1500 produced by Nacalai Tesque Inc., average molecular weight: 1300 to 1600) were dispersed in 72.2 parts by mass of water to obtain a dispersion solution. At that time, the content rate of the filler (a) and that of the stretching auxiliary agent (c) contained in the dispersion solution were 744 mass% and 25 mass% respectively for 100 mass% of the resin binder (b).

The properties of the laminated porous films obtained in the production example 1 were evaluated by using the obtained dispersion solution. The results are shown in table 1.

[Example 6]

23.8 parts by mass of the alumina (Sumicorundum AA-06 produced by Sumitomo Chemical Co., Ltd., average particle diameter: 0.6μm), 3.2 parts by mass of the polyvinyl alcohol (PVA124 produced by Kuraray Co., Ltd., saponification degree: 98.0 to 99.0, average degree of polymerization: 2400), and 0.8 parts by mass of the polyethylene glycol (polyethylene glycol10000 produced by HAMPTON RESEARCH CORP.) were dispersed in 72.2 parts by mass of water to obtain a dispersion solution. At that time, the content rate of the filler (a) and that of the stretching auxiliary agent (c) contained in the dispersion solution were 744 mass% and 25 mass% respectively for 100 mass% of the resin binder (b). The properties of the laminated porous films obtained in the production example 1 were evaluated by using the obtained dispersion solution. The results are shown in table 1.

[Example 7]

25.1 parts by mass of the alumina (Sumicorundum AA-06 produced by Sumitomo Chemical Co., Ltd., average particle diameter: 0.6μm), 1.9 parts by mass of the polyvinyl alcohol (PVA124 produced by Kuraray Co., Ltd., saponification degree: 98.0 to 99.0, average degree of polymerization: 2400), and 0.5 parts by mass of glycerin (produced by Nacalai Tesque Inc.) were dispersed in 72.5 parts by mass of water to obtain a dispersion solution. At that time, the content rate of the filler (a) and that of the stretching auxiliary agent (c) contained in the dispersion solution were 1321 mass% and 26 mass% respectively for 100 mass% of the resin binder (b).
The properties of the laminated porous films obtained in the production example 1 were evaluated by using the obtained dispersion solution. The results are shown in table 1.

[Example 8]

23.8 parts by mass of the alumina (Sumicorundum AA-06 produced by Sumitomo Chemical Co., Ltd., average particle diameter: 0.6μm), 3.2 parts by mass of the polyvinyl alcohol (PVA124 produced by Kuraray Co., Ltd., saponification degree: 98.0 to 99.0, average degree of polymerization: 2400), and 0.3 parts by mass of the glycerin (produced by Nacalai Tesque Inc.) were dispersed in 72.7 parts by mass of water to obtain a dispersion solution. At that time, the content rate of the filler (a) and that of the stretching auxiliary agent (c) contained in the dispersion solution were 744 mass% and 9 mass% respectively for 100 mass% of the resin binder (b).
The properties of the laminated porous films obtained in the production example 1 were evaluated by using the obtained dispersion solution. The results are shown in table 1.

[Example 9]

18.1 parts by mass of the alumina (Sumicorundum AA-06 produced by Sumitomo Chemical Co., Ltd., average particle diameter: 0.6μm), 8.9 parts by mass of the polyvinyl alcohol (PVA124 produced by Kuraray Co., Ltd., saponification degree: 98.0 to 99.0, average degree of polymerization: 2400), and 2.2 parts by mass of the polyethylene glycol (polyethylene glycol#200 produced by Nacalai Tesque Inc., average molecular weight: 190 to 210) were dispersed in 70.8 parts by mass of water to obtain a dispersion solution. At that time, the content rate of the filler (a) and that of the stretching auxiliary agent (c) contained in the dispersion solution were 203 mass% and 25 mass% respectively for 100 mass% of the resin binder (b).
The properties of the laminated porous films obtained in the production example 1 were evaluated by using the obtained dispersion solution. The results are shown in table 1.

[Example 10]

23.8 parts by mass of the alumina (Sumicorundum AA-06 produced by Sumitomo Chemical Co., Ltd., average particle diameter: 0.6μm), 3.2 parts by mass of the polyvinyl alcohol (PVA124 produced by Kuraray Co., Ltd., saponification degree: 98.0 to 99.0, average degree of polymerization: 2400), and 0.8 parts by mass of polyethylene glycol dimethyl ether (produced by Sigma-Aldrich Corporation, average molecular weight: 250) were dispersed in 72.2 parts by mass of water to obtain a dispersion solution. At that time, the content rate of the filler (a) and that of the stretching auxiliary agent (c) contained in the dispersion solution were 744 mass% and 25 mass% respectively for 100 mass% of the resin binder (b).
The properties of the laminated porous films obtained in the production example 1 were evaluated by using the obtained dispersion solution. The results are shown in table 1.

[Example 11]

18.1 parts by mass of the alumina (Sumicorundum AA-06 produced by Sumitomo Chemical Co., Ltd., average particle diameter: 0.6μm), 8.9 parts by mass of the polyvinyl alcohol (PVA124 produced by Kuraray Co., Ltd., saponification degree: 98.0 to 99.0, average degree of polymerization: 2400), and 2.2 parts by mass of the polyethylene glycol dimethyl ether (produced by Sigma-Aldrich Corporation, average molecular weight: 250) were dispersed in 70.8 parts by mass of water to obtain a dispersion solution. At that time, the content rate of the filler (a) and that of the stretching auxiliary agent (c) contained in the dispersion solution were 203 mass% and 25 mass% respectively for 100 mass% of the resin binder (b).

The properties of the laminated porous films obtained in the production example 1 were evaluated by using the obtained dispersion solution. The results are shown in table 1.

[Example 12]

24.3 parts by mass of the alumina (Sumicorundum AA-06 produced by Sumitomo Chemical Co., Ltd., average particle diameter: $0.6\mu m$), 2.7 parts by mass of the polyvinyl alcohol (PVA124 produced by Kuraray Co., Ltd., saponification degree: 98.0 to 99.0, average degree of polymerization: 2400), and 0.7 parts by mass of the polyethylene glycol (polyethylene glycol#200 produced by Nacalai Tesque Inc., average molecular weight: 190 to 210) were dispersed in 72.3 parts by mass of water to obtain a dispersion solution. At that time, the content rate of the filler (a) and that of the stretching auxiliary agent (c) contained in the dispersion solution were 900 mass% and 26 mass% respectively for 100 mass% of the resin binder (b).

The properties of the laminated porous films obtained in the production example 2 were evaluated by using the obtained dispersion solution. The results are shown in table 1.

[Example 13]

23.8 parts by mass of the alumina (Sumicorundum AA-06 produced by Sumitomo Chemical Co., Ltd., average particle diameter: $0.6\mu m$), 3.2 parts by mass of the polyvinyl alcohol (PVA124 produced by Kuraray Co., Ltd., saponification degree: 98.0 to 99.0, average degree of polymerization: 2400), and 0.3 parts by mass of the polyethylene glycol (polyethylene glycol#200 produced by Nacalai Tesque Inc., average molecular weight: 190 to 210) were dispersed in 72.7 parts by mass of water to obtain a dispersion solution. At that time, the content rate of the filler (a) and that of the stretching auxiliary agent (c) contained in the dispersion solution were 744 mass% and 9 mass% respectively for 100 mass% of the resin binder (b).

The properties of the laminated porous films obtained in the production example 2 were evaluated by using the obtained dispersion solution. The results are shown in table 1.

[Comparison Example 1]

26.5 parts by mass of the alumina (Sumicorundum AA-06 produced by Sumitomo Chemical Co., Ltd., average particle diameter: $0.6\mu m$) and 0.5 parts by mass of the polyvinyl alcohol (PVA124 produced by Kuraray Co., Ltd., saponification degree: 98.0 to 99.0, average degree of polymerization: 2400) were dispersed in 73.0 parts by mass of water to obtain a dispersion solution. At that time, the content rate of the filler (a) and that of the stretching auxiliary agent (c) contained in the dispersion solution were 5300 mass% and 0 mass% respectively for 100 mass% of the resin binder (b).

The properties of the laminated porous films obtained in the production example 1 were evaluated by using the obtained dispersion solution. The results are shown in table 1.

[Comparison Example 2]

12.3 parts by mass of the alumina (Sumicorundum AA-06 produced by Sumitomo Chemical Co., Ltd., average particle diameter: $0.6\mu m$), 14.7 parts by mass of the polyvinyl alcohol (PVA124 produced by Kuraray Co., Ltd., saponification degree: 98.0 to 99.0, average degree of polymerization: 2400), and 1.5 parts by mass of the polyethylene glycol (polyethylene glycol#200 produced by Nacalai Tesque Inc., average molecular weight: 190 to 210) were dispersed in 71.5 parts by mass of water to obtain a dispersion solution. At that time, the content rate of the filler (a) and that of the stretching auxiliary agent (c) contained in the dispersion solution were 87 mass% and 10 mass% respectively for 100 mass% of the resin binder (b).

The properties of the laminated porous films obtained in the production example 1 were evaluated by using the obtained dispersion solution. The results are shown in table 1.

[Comparison Example 3]

23.8 parts by mass of the alumina (Sumicorundum AA-06 produced by Sumitomo Chemical Co., Ltd., average particle diameter: $0.6\mu m$) and 3.2 parts by mass of the polyvinyl alcohol (PVA124 produced by Kuraray Co., Ltd., saponification degree: 98.0 to 99.0, average degree of polymerization: 2400) were dispersed in 73.0 parts by mass of water to obtain a dispersion solution. At that time, the content rate of the filler (a) and that of the stretching auxiliary agent (c) contained in the dispersion solution were 744 mass% and 0 mass% respectively for 100 mass% of the resin binder (b).

The properties of the laminated porous films obtained in the production example 1 were evaluated by using the obtained dispersion solution. The results are shown in table 1.

[Comparison Example 4]

A dispersion solution in which 27.0 parts by mass of the polyvinylalcohol (PVA124 produced by Kuraray Co., Ltd., saponification degree:98.0 to 99.0, average degree of polymerization:2400) was dispersed in 73.0 parts by mass of water was obtained. At that time, both the content rate of the filler (a) and that of the stretching auxiliary agent (c) contained in the dispersion solution were 0 mass% for 100 mass% of the resin binder (b).

The properties of the laminated porous films obtained in the production example 1 were evaluated by using the obtained dispersion solution. The results are shown in table 1.

[Comparison Example 5]

27.0 parts by mass of the polyvinyl alcohol (PVA124 produced by Kuraray Co., Ltd., saponification degree: 98.0 to 99.0, average degree of polymerization: 2400) and 6.8 parts by mass of the polyethylene glycol (polyethylene glycol#200 produced by Nacalai Tesque Inc., average molecular weight: 190 to 210) were dispersed in 66.3 parts by mass of water to obtain a dispersion solution. At that time, the content rate of the filler (a) and that of the stretching auxiliary agent (c) contained in the dispersion solution were 0 mass% and 25 mass% respectively for 100 mass% of the resin binder (b).

The properties of the laminated porous films obtained in the production example 1 were evaluated by using the obtained dispersion solution. The results are shown in table 1.

[Comparison Example 6]

The properties of the porous polyolefin resin laminated films obtained in the production example 1 were evaluated without carrying out the dispersion solution application step. The results are shown in table 1.

[Comparison Example 7]

The properties of the porous polyolefin resin laminated films obtained in the production example 2 were evaluated without carrying out the dispersion solution application step. The results are shown in table 1.

Table 1

| | Content rete of filler (a) | Stretching auxiliary agent(c) | Porous polyolefin resin film | Air permeability | SD property | Stretch property | Heat resistance | β crystal Activity | |
|---|---|---|---|---|---|---|---|---|---|
| | Mass% | Mass% | | second/100 ml | second/100 ml | | | DSC | XRD |
| Example 1 | 1321 | 26 | PP/PE/PP | 640 | >99999 | O | O | O | O |
| Example 2 | 1321 | 100 | PP/PE/PP | 670 | >99999 | O | O | O | O |
| Example 3 | 744 | 9 | PP/PE/PP | 660 | >99999 | O | O | O | O |
| Example4 | 744 | 25 | PP/PE/PP | 630 | >99999 | O | O | O | O |
| Example 5 | 744 | 25 | PP/PE/PP | 630 | >99999 | O | O | O | O |
| Example 6 | 744 | 25 | PP/PE/PP | 660 | >99999 | O | O | O | O |
| Example 7 | 1321 | 26 | PP/PE/PP | 640 | >99999 | O | O | O | O |
| Exemple 8 | 744 | 9 | PP/PE/PP | 670 | >99999 | O | O | O | O |
| Example 9 | 203 | 25 | PP/PE/PP | 800 | >99999 | O | O | O | O |
| Example 10 | 744 | 25 | PP/PE/PP | 610 | >99999 | O | O | O | O |
| Example 11 | 203 | 25 | PP/PE/PP | 820 | >99999 | O | O | O | O |
| Example 12 | 900 | 26 | PP | 280 | - | O | O | O | O |
| Example 13 | 744 | 9 | PP | 260 | - | O | O | O | O |
| Comparison example 1 | 5300 | 0 | PP/PE/PP | 630 | >99999 | × | O | O | O |
| Comparison example 2 | 97 | 10 | PP/PE/PP | 2100 | >99999 | × | O | O | O |
| Comparison example 3 | 744 | O | PP/PE/PP | 630 | >99999 | × | O | O | O |
| Comparison example 4 | 0 | 0 | PP/PE/PP | >99999 | - | × | O | O | O |
| comparison example 5 | 0 | 25 | PP/PE/PP | >99999 | >99999 | O | O | O | O |

(continued)

| | Content rete of filler (a) | Stretching auxiliary agent(c) | Porous polyolefin resin film | Air permeability | SD property | Stretch property | Heat resistance | β crystal Activity | |
|---|---|---|---|---|---|---|---|---|---|
| | Mass% | Mass% | | second/100 ml | second/100 ml | | | DSC | XRD |
| Comparison example 6 | - | - | PP/PE/PP | 630 | >99999 | O | × | O | O |
| Comparison example 7 | - | - | PP | 250 | - | O | × | O | O |

The laminated porous films of the examples had all excellent stretch property, heat resistance, and interconnection property.

On the other hand, the laminated porous films of the comparison examples 1 and 3 in which the dispersant did not contain the stretching auxiliary agent (c) had an insufficient stretch property. The laminated porous film of the comparison example 2 in which the dispersant contained the resin binder (b) at a high content rate had a preferable stretch property, but an insufficient interconnection property. The laminated porous film of the comparison example 4 in which the dispersant did not contain the filler (a) nor the stretching auxiliary agent (c) was insufficient in its interconnection property and stretch property. The laminated porous film of the comparison example 5 in which the dispersant did not contain the filler (a) was preferable in its stretch property, but insufficient in its interconnection property.

In the comparison examples 6 and 7, because the heat-resistant layer was not layered on the porous polyolefin resin film, the laminated porous film had an insufficient heat resistance.

INDUSTRIAL APPLICABILITY

The laminated porous film of the present invention can be applied to various uses in which air-permeable property is demanded. The laminated porous film can be suitably used as a material for the separator of the lithium battery; materials for hygienic products such as disposable diaper, body fluid absorbing pads such as sanitary products, a bed sheet, and the like; materials for medical supplies such as surgical gown, a base material for stupe, and the like; materials for clothing items such as jumper, sportswear, rain wear, and the like; building materials such as wallpaper, a roof-waterproofing material, a heat insulation material, a sound-absorbing material, and the like; a material for a container of a desiccant; a material for a container of a moisture-proof agent; a material for a container of a deoxidizer; a material for a pocket warmer; and a material for a package of packing foods to keep them fresh, and a material for a package of packing foods.

EXPLANATION OF REFERENCE SYMBOLS AND NUMERALS

20: secondary battery
21: positive electrode plate
22: negative electrode plate
24: positive lead
25: negative lead
26: gasket
27: positive lid
31: aluminum plate
32: separator
33: clip
34: length direction of film
35: width direction of film

**Claims**

1.  A laminated porous film in which a heat-resistant layer containing a filler (a), a resin binder (b), and a stretching auxiliary agent (c) is layered on at least one surface of a porous polyolefin resin film;
    wherein an air permeability is not more than 2000 seconds/100 ml.

2.  A laminated porous film according to claim 1, wherein said stretching auxiliary agent (c) has a boiling point of not less than 120°C or does not have a boiling point.

3.  A laminated porous film according to claim 1 or 2, wherein said stretching auxiliary agent (c) consists of not less than one kind selected from among glycol, glycol polymer, a modified substance of said glycol polymer, and glycerin.

4.  A laminated porous film according to any one of claims 1 through 3, which has a β crystal activity.

5.  A separator for a non-aqueous electrolyte secondary battery in which a laminated porous film according to any one of claims 1 through 4 is used.

6. A non-aqueous electrolyte secondary battery in which a separator for a non-aqueous electrolyte secondary battery according to claim 5 is used.

# Fig. 1

Fig. 2A

Fig. 2B

## INTERNATIONAL SEARCH REPORT

| International application No. |
|---|
| PCT/JP2011/058720 |

**A. CLASSIFICATION OF SUBJECT MATTER**

*B32B27/32*(2006.01)i, *B32B5/22*(2006.01)i, *H01M2/16*(2006.01)i, *H01M10/0566*
(2010.01)i

According to International Patent Classification (IPC) or to both national classification and IPC

**B. FIELDS SEARCHED**

Minimum documentation searched (classification system followed by classification symbols)
B32B1/00-43/00, H01M2/16, H01M10/0566

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-186721 A (Asahi Kasei Chemicals Corp.), 14 August 2008 (14.08.2008), claims; paragraphs [0017], [0018], [0028] & US 2010/0285348 A1 & EP 2116372 A1 & KR 10-2009-0094473 A & CN 101600571 A & WO 2008/093575 A1 | 1-6 |
| Y | JP 2009-026733 A (Asahi Kasei Chemicals Corp.), 05 February 2009 (05.02.2009), claim 1; paragraphs [0025], [0035], [0038], [0043], [0046], [0051] & US 2010/0285348 A1 & EP 2116372 A1 & KR 10-2009-0094473 A & CN 101600571 A & WO 2008/093575 A1 | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 July, 2011 (04.07.11) | 12 July, 2011 (12.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/058720 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-227972 A  (Sumitomo Chemical Co., Ltd.), 12 August 2004 (12.08.2004), claims 1 to 3; paragraphs [0010], [0011] (Family: none) | 1-6 |
| Y | WO 2008/149986 A1  (Asahi Kasei Chemicals Corp.), 11 December 2008 (11.12.2008), claim 1; paragraphs [0043], [0044], [0047] & US 2010/0203396 A1    & EP 2153990 A1 & KR 10-2009-0130885 A   & CN 101687404 A | 1-6 |
| Y | JP 2009-114434 A  (Toray Industries, Inc.), 28 May 2009 (28.05.2009), claims 1, 2; paragraphs [0020], [0029], [0042], [0043], [0045], [0046] (Family: none) | 1-6 |
| Y | JP 2008-284756 A  (Oji Paper Co., Ltd.), 27 November 2008 (27.11.2008), paragraphs [0022] to [0025] (Family: none) | 1-6 |
| A | JP 2005-162843 A  (Mitsubishi Plastics, Inc.), 23 June 2005 (23.06.2005), paragraphs [0016], [0017], [0019] (Family: none) | 1-6 |
| A | JP 3756815 B2  (Mitsubishi Electric Corp.), 15 March 2006 (15.03.2006), entire text & EP 1115166 A1          & US 2001/0005560 A1 & WO 2000/079618 A1 | 1-6 |
| A | JP 2000-223107 A  (Sumitomo Chemical Co., Ltd.), 11 August 2000 (11.08.2000), entire text (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004227972 A
- JP 2007280911 A
- JP 2008186721 A
- JP 2009227891 A
- JP 3739481 B

- JP 2003306585 A
- JP 6289566 A
- JP 9194650 A
- JP 4181651 A

**Non-patent literature cited in the description**

- **A. ZAMBELLI et al.** *Marcomolecules,* 1975, vol. 8, 687
- *Macromol. Chem.,* 1986, vol. 187, 643-652

- *Prog. Polym. Sci.,* 1991, vol. 16, 361-404
- *Macromol. Symp.,* 1995, vol. 89, 499-511
- *Macromol. Chem.,* 1964, vol. 75, 134